(19) Europäisches Patentamt
European Patent Office
Office européen des brevets

(11) **EP 3 908 511 B1**

(12) **FASCICULE DE BREVET EUROPEEN**

(45) Date de publication et mention de la délivrance du brevet:
**09.10.2024   Bulletin 2024/41**

(21) Numéro de dépôt: **19894393.8**

(22) Date de dépôt: **03.12.2019**

(51) Classification Internationale des Brevets (IPC):
**B62M 6/55** *(2010.01)*       **B62M 11/14** *(2006.01)*
**F16H 1/32** *(2006.01)*

(52) Classification Coopérative des Brevets (CPC):
**B62M 6/55; B62K 19/34; B62M 11/14**

(86) Numéro de dépôt international:
**PCT/FR2019/000196**

(87) Numéro de publication internationale:
**WO 2020/144411 (16.07.2020 Gazette 2020/29)**

(54) **RÉDUCTEUR**

UNTERSETZUNGSGETRIEBE

REDUCTION GEAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **08.01.2019   FR 1900164**

(43) Date de publication de la demande:
**17.11.2021   Bulletin 2021/46**

(73) Titulaire: **Mavic Group**
**74650 Chavanod (FR)**

(72) Inventeur: **MERCAT, Jean-Pierre**
**74650 Chavanod (FR)**

(74) Mandataire: **Innovincia et al**
**11, avenue des Tilleuls**
**74200 Thonon-Les-Bains (FR)**

(56) Documents cités:
CN-U- 207 311 751       JP-A- H0 579 537
US-A- 4 117 746         US-A- 5 433 672
US-A1- 2013 045 827     US-A1- 2016 297 500

• S V THUBE ET AL: "Dynamic Analysis of a Cycloidal Gearbox Using Finite Element Method Dynamic Analysis of a Cycloidal Gearbox Using Finite Element Method", 31 January 2012 (2012-01-31), XP055672806, Retrieved from the Internet <URL:https://pdfs.semanticscholar.org/c337/0c 8858de54c6563d70b8b24835de3b06c615.pdf> [retrieved on 20200302]

**EP 3 908 511 B1**

**Description**

L'invention concerne les réducteurs de vitesse mécanique pour moteur électrique. L'invention concerne notamment les réducteurs mécaniques pour moteur électriques utilisés dans les dispositifs d'assistance de vélos.

La particularité d'un vélo à assistance électrique est qu'il doit y avoir deux voies de transmission de puissance : une voie pédalier-roue qui transmet le couple généré par le cycliste, et une voie moteur-roue. Ces deux voies de transmission doivent pouvoir se superposer car par principe et pour répondre à la réglementation, le moteur ne doit fournir un couple à la roue que dans la mesure où le cycliste, lui-même, par l'intermédiaire du pédalier, fournit également un couple à la roue.

Différentes configurations de vélo à assistance électrique sont désormais disponibles, la présente invention concerne plus particulièrement, les vélos pour lesquels, le moteur d'assistance est placé dans la partie centrale du vélo en étant notamment intégré au pédalier.

Lors de l'utilisation d'un vélo à assistance électrique, différentes phases fonctionnelles distinctes sont à envisager : le pédalage sans assistance (phase 1), le pédalage avec assistance (phase 2), le pédalage à une vitesse de rotation supérieure à la vitesse de rotation maximale générée par le moteur (phase 3), l'arrêt brusque de pédalage par le cycliste (phase 4) et le rétro-pédalage (phase 5).

Lors du pédalage sans assistance, le comportement du vélo, pour le cycliste, doit ressembler le plus possible à celui d'un vélo sans moteur, c'est-à-dire que tout ce qui est nécessaire à l'assistance comme le moteur électrique, le réducteur mécanique ou tout autre organe de transmission ne doit ni rajouter des frottements supplémentaires, ni générer de bruit supplémentaire, ni rajouter d'inertie supplémentaire.

A cet effet, il est courant d'intercaler un dispositif de roue libre en série dans la voie de transmission entre le moteur et la roue. Les vélos traditionnels, c'est-à-dire, sans assistance électrique, sont d'ailleurs pratiquement tous déjà équipés de mécanisme de roue libre entre le pédalier et la roue. Par conséquent, il est nécessaire de prévoir deux dispositifs de roue libre, chacun étant placé dans une des deux voies de transmission distinctes : moteur-roue et pédalier-roue.

Lors du pédalage avec assistance (phase 2), la voie de transmission moteur-roue doit être opérationnelle. La voie de transmission pédalier-roue doit également être opérationnelle.

Dans le cas d'un vélo à moteur central, il est courant de concevoir le vélo de telle manière que la voie de transmission moteur-roue et la voie de transmission pédalier-roue partagent le plus d'éléments en commun. En général, le moteur et les pédales entraînent un plateau commun lequel est relié à la roue par une chaîne de vélo classique à maillons. Dans ce cas, le moteur doit pouvoir se connecter mécaniquement pour apporter un couple moteur d'assistance au niveau du pédalier ou du plateau.

Lorsque dans cette phase de pédalage avec assistance, le cycliste veut pédaler plus vite que la vitesse maxi du moteur, il faut que le moteur se déconnecte afin que le cycliste ne soit pas freiné par le moteur (phase 3). C'est pourquoi, une roue-libre simple est placée à la sortie du moteur. En général, ces roues libres sont de deux types, à cliquet ou à galet.

Chacun de ces types de roue libre présente des inconvénients. Une roue libre à cliquet peut devenir bruyante alors qu'une roue-libre à galet sera certes silencieuse mais sera lourde et générera un couple de frottement plus élevé en phase de roue-libre.

Lorsque le cycliste veut s'arrêter de pédaler brutalement (phase 4), il faudrait pour des raisons de confort et de sécurité, que : Le temps de réaction de la coupure du moteur soit très court et que l'inertie du moteur et de sa chaîne de transmission soit réduite pour éviter de continuer à entraîner les jambes du cycliste ou continuer à faire avancer le vélo alors que le cycliste veut s'arrêter instantanément. Ce n'est malheureusement pas toujours ce qui se passe pour les vélos de l'art antérieur.

Par exemple, dans l'art antérieur US 9,616,969 et US 8,757,311 on retrouve comme sur la plupart des vélos à assistance électrique le plateau d'entraînement qui est entraîné de manière parallèle via une première roue-libre par le pédalier permettant de transmettre le couple de pédalage du cycliste et via une deuxième roue libre par le moteur d'assistance permettant de transmettre le couple d'assistance issu du moteur électrique. Avec une telle disposition, en cas d'arrêt brutal de pédalage par le cycliste, les jambes du cycliste ne seront pas entraînées en rotation car la première roue libre du pédalier se débrayera et il pourra s'arrêter immédiatement de pédaler. En revanche, le moteur continuera d'entraîner le vélo sur sa lancée le temps qu'il décélère ce qui peut être dangereux si le cycliste doit s'arrêter en urgence. D'autre part, ces solutions présentent l'inconvénient d'être relativement lourdes et volumineuses car la mise en place d'un entraînement parallèle entre le moteur et le plateau et de la deuxième roue libre qui lui est associé nécessite la présence de pièces mécaniques supplémentaires. Il en résulte de plus, que ce genre de vélo à assistance électrique pâtit d'une esthétique générale peu avantageuse. Par exemple, le boîtier de pédalier présente un volume surdimensionné. Même si cette dernière caractéristique peut être considérée comme peu gênante pour un vélo tout terrain ou un vélo de ville, pour lesquels les codes esthétiques s'accommodent parfaitement avec des éléments ayant des volumes importants (cf. diamètre large des tubes de cadre), elle représente un handicap sérieux pour les vélos de course sur route pour lesquels légèreté, aérodynamisme, finesse sont importants et doivent être évaluable tant techniquement qu'esthétiquement.

Dans d'autres configurations, par exemple dans EP 2 502 819 le plateau n'est pas entraîné de manière parallèle par deux roues libres distinctes car le plateau se trouve en connexion directe avec les manivelles de sorte que lorsque le cycliste décide de s'arrêter de pédaler brusquement, il doit également arrêter toute la chaîne de transmission du moteur. Et comme l'arrêt de cette voie de transmission moteur demande un certain temps, les pédales vont continuer à tourner pendant ce court laps de temps et entraîner les jambes du cycliste. Il s'agit d'une sensation désagréable qui nuit au confort et à la qualité de l'expérience du cycliste. De plus lorsque le cycliste s'arrêtera brutalement de pédaler, il pourra créer un couple de freinage très élevé sur la chaîne de transmission du moteur pouvant conduire à sa dégradation ou sa rupture. Cette construction, se présente finalement comme la simple adaptation postérieure d'une assistance sur un vélo existant. Bien que l'esthétique générale du vélo puisse ne pas être beaucoup affectée dans ces configurations, les inconvénients en termes de confort d'utilisation et de fiabilité du système les rendent ni désirables, ni recommandables.

Il y a enfin une dernière phase fonctionnelle de l'utilisation d'un vélo à assistance électrique qui pose problèmes dans certaines configurations (phase 5). La première de ces configurations est lorsque le cycliste souhaite pédaler en marche arrière pour repositionner ses pédales, par exemple à l'approche d'un virage afin qu'elles ne viennent pas frotter contre la route ou lorsque le cycliste veut démarrer et positionner son pied d'appel en position sensiblement horizontale.

Il existe une deuxième configuration au cours de laquelle se produit une marche arrière, c'est lorsqu'on manoeuvre son vélo pour le ranger. En effet, si le vélo se déplace en marche arrière, la roue libre de transmission de la roue arrière va se bloquer et entraîner les pédales en marche arrière. Lors de cette phase, qu'on peut appeler rétropédalage, les vélos à assistance électrique comportant une roue libre simple, par exemple à cliquet, dans la voie de transmission moteur-roue, vont voir cette roue libre également se bloquer en marche arrière et par conséquent entraîner le moteur en marche arrière. La rotation du moteur en marche arrière génère un couple de frottement élevé et une inertie équivalente très élevée. Dans ce cas, le cycliste est capable de fournir un couple de rétropédalage élevé, ce qui va provoquer une accélération angulaire négative élevée et donc un couple négatif très élevé à cause de l'inertie équivalente importante du moteur, ce qui risque de détruire les engrenages du motoréducteur. D'autre part, sur ce type de motorisation, le rapport de réduction entre la vitesse de rotation du moteur et la vitesse de rotation de l'arbre de pédalier est de l'ordre de 100, ce qui réduit inévitablement le rendement de ce type de réducteur, le réducteur peut même devenir irréversible et se bloquer dès qu'un moindre défaut de lubrification ou d'usure apparaît et c'est pour cela que le brevet WO 2016/128789 intègre un limiteur de couple qui permet de déconnecter le moteur en cas de couple trop élevé pour éviter de rompre les dentures.

Cette phase de rétro pédalage est, de plus, souvent mise en oeuvre en magasin lors de l'achat du vélo. En effet il est usuel, chez un cycliste averti, de tourner les manivelles à l'envers pour estimer les pertes de frottement de la chaîne de transmission (incluant le frottement des joints et roulements de boîtier de pédalier, de la chaîne et de ses galets ainsi que des roulements de la roue libre arrière), ce qui permet d'estimer la qualité des frottements de la transmission. Lorsque l'on réalise cette expérimentation sur un VAE à roue libre simple, la roue libre se bloque en marche arrière et vient entraîner le moteur en marche arrière, comme le rapport de réduction entre le moteur et le pédalier est élevé, le moteur est donc entraîné en marche arrière à une vitesse de rotation élevée, augmentant ainsi la sensation d'inertie et générant un couple de frottement élevé due aux frottements mécaniques et électromagnétiques du moteur qui se retrouvent multipliés par le rapport de réduction élevé ainsi que par l'inverse du rendement du réducteur, rendant donc cette expérimentation de marche arrière très négative.

Les roue-libres utilisées dans les vélos à assistance électrique de l'art antérieur sont des roue-libres simples se bloquant lorsqu'un couple moteur positif est appliqué sur l'élément d'entrée (moteur d'assistance) et qui se trouve alors transmis à l'élément de sortie (l'arbre de pédalier). En revanche la roue-libre ne permet pas de transmettre un couple négatif en sens opposé sur le même élément d'entrée et se mettra alors à tourner librement dans ce sens de roue-libre. Ainsi tout se passe à souhait quand le sens de rotation est le sens normal d'utilisation, en revanche lorsque l'on inverse le sens de rotation sur l'élément de sortie, l'arbre de pédalier, tout s'inverse, c'est-à-dire que la roue-libre va se bloquer et transmettre du couple en marche arrière en entraînant ainsi toute la chaîne de transmission en marche arrière, ce qui présente les inconvénients listés ci-dessus.

Parmi les différents types de vélo à assistance électrique, ceux dont l'assistance se fait au niveau du pédalier ont un certain nombre de caractéristiques propres. Certains d'entre-eux comportent généralement un moteur dont l'axe est disposé en avant de l'axe du pédalier et un réducteur permettant de réduire la vitesse du moteur tout en accroissant son couple. Le moteur est le plus souvent décalé en avant de l'axe du pédalier car l'encombrement autour de l'axe du pédalier est très limité en largeur pour ne pas augmenter la largeur entre les manivelles mais aussi radialement (en diamètre) pour ne pas trop reculer la roue arrière afin que son pneu ait suffisamment de place pour ne pas frotter sur le carter externe du moteur. Le fait d'éloigner la roue arrière de l'axe du pédalier rend le vélo plus long et donc moins maniable et plus difficile à transporter et à stocker, mais a aussi pour effet de l'alourdir, Ces vélos à moteur décalé ont généralement un réducteur ayant un ou plusieurs trains d'engrenages en série ou utilisant une chaîne ou une courroie. Certains vélo à assistance électrique possèdent un moteur coaxial à l'axe du pédalier comme décrit dans la demande de brevet US2016/0245386, ce type de dispositif d'assistance comporte un moteur dont le stator et le rotor ont une forme tubulaire tournant de manière coaxiale autour de l'axe de pédalier, il comporte un réducteur coaxial a onde de déformation permettant de transmettre le couple moteur au travers d'un roulement elliptique entraînant par sa bague extérieure une série d'aiguilles se décalant de quelques dents à chaque tour permettant ainsi d'obtenir dans l'exemple décrit un rapport de réduction de 36. Ce type de moteur d'assistance présente l'inconvénient d'avoir deux roue-libres indépendantes entraînant de manière parallèle le plateau de transmission dans le sens normal d'avancement, permettant ainsi de transmettre la puissance motrice venant soit des pédales par une première roue-libre, soit du moteur d'assistance par une seconde roue-libre jusqu'à la roue arrière par l'intermédiaire de la chaîne.

On peut noter que dans le dispositif d'assistance décrit dans le document US2016/0245386, lorsque le cycle va être entraîné à la main en marche arrière lors d'une manoeuvre par exemple, l'inversion du sens de rotation va entraîner alors le blocage de toutes les roue-libres et entraîner le rotor du moteur à très grande vitesse en marche arrière si tant est que le réducteur soit réversible, pouvant conduire ainsi à bloquer ou détériorer le réducteur.

On peut noter également que ce système comporte un capteur de couple tubulaire encastré sur son coté menant à l'axe de pédalier et encastré à son autre extrémité menée à la roue libre entraînant le plateau, permettant ainsi de mesurer le couple de transmission du cycliste.

Ce capteur de couple se trouve donc disposé de manière coaxiale entre l'axe de pédalier central et les roulements du rotor du moteur lui-même disposé à l'intérieur du stator du moteur conduisant ainsi à un diamètre extérieur très grand augmentant le volume et la masse de l'ensemble, la taille du diamètre extérieur rend également ce type de vélo très différent d'un vélo sans assistance ce que beaucoup de pratiquants jugent inesthétique, de plus la taille du diamètre extérieur tend à reculer la roue arrière et à limiter les capacité de franchissement du vélo dont le carter du moteur pourra heurter des éléments du sol ce qui est un réel problème en utilisation tout-terrain. Un dispositif d'assistance conforme au document US2016/0245386 est déjà proposé sur le marché sous la référence TQ HPR 120S (https://www.tq-e-mobility.com/en/TQ-HPR-120S/Technical-Specifications). Ce dispositif d'assistance présente effectivement un encombrement radial et un poids important puisque son diamètre extérieur atteint 146 mm pour un poids de 3,9 Kg. Le document JP H05 79537 décrit un réducteur mécanique selon le préambule de la revendication 1.

L'objectif de l'invention est de fournir un réducteur pour moteur électrique, et notamment pour un vélo à assistance électrique qui ne présente pas les inconvénients des réducteurs de l'art antérieur. L'objectif de l'invention est de proposer un réducteur qui soit le moins volumineux et le moins lourd possible, celui-ci ayant néanmoins un fort rapport de réduction.

L'objectif de l'invention est atteint par la fourniture d'un réducteur mécanique comportant un rotor, une couronne extérieure de diamètre primitif D55, un porte-satellite, lequel comprend au moins un satellite de diamètre primitif D50 prévu pour tourner à l'intérieur de la couronne avec une excentricité de valeur « e » égale à la moitié de la différence entre le diamètre D55 et le diamètre D50; $e = \frac{1}{2}(D55 - D50)$ ; ledit au moins un satellite étant monté rotatif sur le rotor par l'intermédiaire d'un excentrique comportant au moins une came, ladite came comprenant une surface interne qui est cylindrique de diamètre D31 et une surface externe qui est cylindrique de diamètre D504, le dit diamètre D504 étant égal à la somme du diamètre D31 et du double de l'excentricité « e » ; $D504 = D31 + 2e$.

De préférence, ledit excentrique comporte deux cames dont les apex respectifs sont diamétralement opposés.

Dans un premier mode de réalisation de l'invention, le réducteur comprend deux excentriques et trois satellites; un premier satellite latéral étant monté sur une came latérale du premier excentrique ; un deuxième satellite latéral étant monté sur une came latérale du deuxième excentrique tandis que le satellite central est monté sur les deux cames centrale juxtaposées du premier excentrique et du deuxième excentrique.

Dans un deuxième mode de réalisation de l'invention, le réducteur comprend deux satellites, chacun desdits deux satellites étant respectivement monté rotatif sur l'une des desdites deux cames par l'intermédiaire de roulements.

L'invention sera mieux comprise à la lumière de la description qui suit. Le dessin qui y est annexé, comprend ;

[Fig. 1] La figure 1 est une vue d'ensemble d'un vélo intégrant un système d'assistance électrique selon un exemple de l'invention.

[Fig. 2] La figure 2 est une vue éclatée du boîtier de pédalier et du dispositif d'assistance selon un premier mode de réalisation de l'invention.

[Fig. 3] La figure 3 est une vue en coupe longitudinale du carter selon le plan A-A.

[Fig. 4] La figure 4 est une vue en coupe longitudinale du carter selon le plan B-B.

[Fig. 5a] La figure 5a est une vue en perspective partiellement coupée du réducteur.

[Fig. 5b] La figure 5b est une vue en perspective de la bague de transmission.

[Fig. 6] La figure 6 est une vue en coupe transversale selon le plan C-C.

[Fig. 7] La figure 7 est une vue en perspective d'un des disques.

[Fig. 8] La figure 8 est une vue en perspective des deux excentriques, ainsi qu'une vue de face d'un des excentriques.

[Fig 9] La figure 9 est une vue en perspective éclatée du joint de Oldham.

[Fig 10] La figure 10 est une vue en perspective partiellement coupée du joint de Oldham.

[Fig. 11] La figure 11 est une vue en coupe transversale selon le plan D-D.

[Fig. 12] La figure 12 est une vue en coupe transversale selon le plan E-E.

[Fig. 13] La figure 13 est une vue en coupe transversale selon le plan F-F.

[Fig. 14] La figure 14 est une vue éclatée du boîtier de pédalier et du dispositif d'assistance selon un deuxième mode de réalisation de l'invention.

[Fig. 15] La figure 15 est une vue en coupe longitudinale du carter selon le plan A-A.du deuxième mode.

[Fig. 16] La figure 16 est une vue en coupe longitudinale du carter selon le plan B-B.du deuxième mode.

[Fig. 17] La figure 17 est une vue en coupe transversale selon le plan C-C. de la fig. 15.

[Fig. 18] La figure 18 est une vue en perspective et une vue de face de l'excentrique.du deuxième mode.

[Fig. 19] La figure 19 est une vue en perspective d'un des disques.du deuxième mode de réalisation.

[Fig. 20] La figure 20 est une vue en coupe transversale selon le plan D-D.

[Fig. 21] La figure 21 est une vue en coupe transversale selon le plan E-E.

[Fig. 22] La figure 22 est une vue en coupe transversale selon le plan F-F.

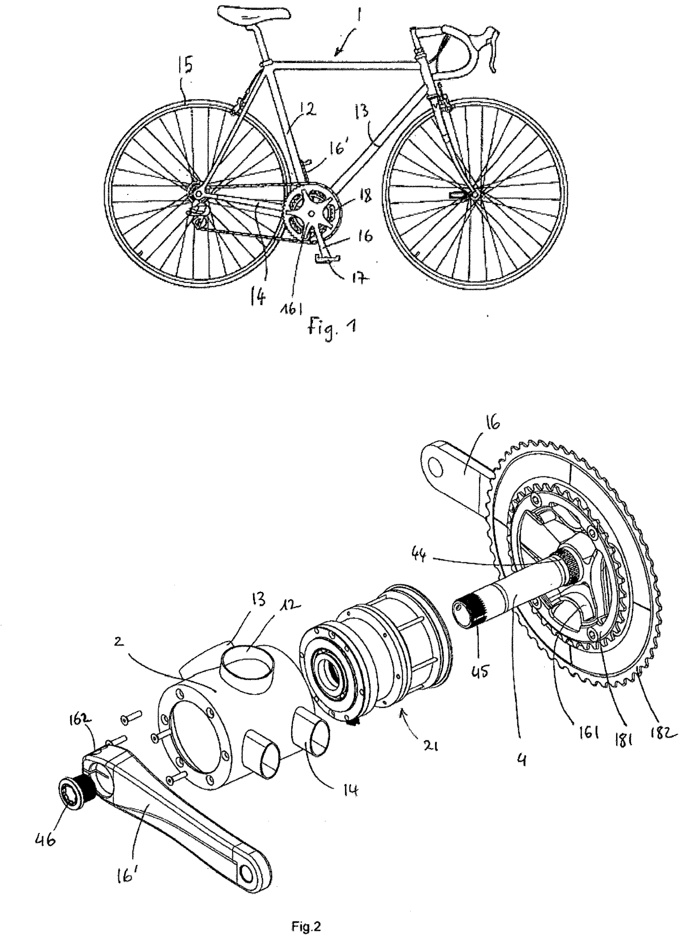

La figure 1 illustre un vélo 1 à assistance électrique intégrant un système d'assistance selon la présente invention. De manière connue, ce vélo comprend un cadre sur lequel sont fixées deux roues. La roue arrière 15 est motrice et est entraînée par le pédalier constitué d'une paire de manivelles 16, 16' et de deux pédales 17. La manivelle droite comprend une étoile 161 dont les extrémités servent à la fixation d'un plateau denté 18. La chaîne de transmission 19.

La figure 2 montre une vue éclatée du dispositif d'assistance selon un premier mode de réalisation de l'invention. Le boîtier de pédalier 2 qui fait partie intégrante du cadre et relie un certain nombre de tube qui le constitue. On peut voir la partie inférieure du tube oblique 13, la partie inférieure du tube de selle 12 et les extrémités antérieures des pattes arrière 14. Le carter 21 contenant un certain nombre des composants du dispositif d'assistance est prévu pour être logé à l'intérieur du boîtier de pédalier 2.

Le pédalier, lui-même, comporte la manivelle gauche 16', un sous-ensemble constitué de l'arbre 4, la manivelle droite 16 et l'étoile 161. La manivelle droite 16 et l'étoile 161 sont de préférence une seule et même pièce fixée de manière permanente à l'arbre 4. L'arbre 4 est de préférence un arbre creux ayant un diamètre extérieur supérieur à 23 mm, cela afin d'offrir un bon compris masse/rigidité. Dans l'exemple décrit ici, le diamètre extérieur $D_4$ de l'arbre est de 24 mm. Une bague cannelée 44 est fixée sur l'arbre à proximité de l'étoile 161. Cette bague cannelée 44 peut être intégrée à l'axe 4 de différentes manières dont certaines sont détaillées ci-dessous.

Une première façon d'intégrer cette bague 44 à l'arbre consister à la coller sur l'arbre 4 d'un pédalier standard en utilisant une colle à haute résistance au cisaillement comme par exemple une époxy bi-composants ou une colle anaérobie en ayant pris soin de préparer auparavant les surfaces suivant les règles de l'art, (dégraissage, sablage éventuel...). Cette solution a l'avantage de pouvoir être réalisée sur un pédalier standard du commerce avec des moyens de mise en oeuvre limités.

Cette bague cannelée peut également faire partie intégrante de l'arbre 4 ou de la manivelle droite en étant usinée directement dans cette dernière, dans ce cas l'arbre 4 doit être conçu et réalisé spécifiquement dès le départ pour être compatible avec l'invention.

Une troisième solution consiste à monter la bague 44 par frettage sur l'arbre 4 en s'assurant que le serrage entre l'arbre 4 et la bague cannelée soit toujours suffisant afin de transmettre le couple d'assistance avec une marge de sécurité. Ce montage fretté peut être associé à des stries longitudinales réalisées dans l'alésage de la bague cannelée afin d'augmenter le couple transmissible, cette solution nécessitant plusieurs centièmes de mm de serrage est envisageable sur un pédalier standard si les tolérances de l'arbre 4 sont suffisamment réduites. Ce montage fretté peut être facilité en refroidissant l'arbre 4 et chauffant la bague cannelée avant leur assemblage.

Dans une quatrième solution, cette bague cannelée 44 peut être simplement montée en pivot sur l'arbre 4 avec un jeu très réduit et disposer à son extrémité externe située contre la manivelle droite d'un disque ou d'au moins un bras radial, de préférence très plat pour minimiser l'encombrement axial, et dont l'extrémité du bras, distant radialement de l'axe central du pédalier, comporte une zone en saillie axiale coopérant avec une face ou une ouverture réalisée dans la manivelle droite afin de pouvoir assurer une liaison en rotation entre elles, capable de transférer le couple d'assistance.

Afin de rendre cette dernière solution adaptable à de nombreux pédaliers standards du marché et sans intervention compliquée, la zone en saille axiale décrite ci-dessus peut être réalisée au moyen d'une pièce interchangeable rapportée sur le bras de la bague cannelée 44, cette dernière pouvant par exemple être réalisée en thermoplastique par impression 3D pour être parfaitement adaptée au design de la manivelle droite. De manière similaire, le disque situé à l'extrémité de cette bague cannelée 44 peut comporter un ou plusieurs trous coopérant avec des petites goupilles rapportées dans un ou plusieurs trous réalisés dans la face interne de la manivelle droite.

Des cannelures 45 sont ménagées à l'extrémité distale de l'arbre 4. Ces cannelures servent à la transmission de couple de la manivelle gauche 16' vers l'arbre 4. La manivelle gauche 16' est serrée contre l'arbre grâce à des vis 162 disposés perpendiculairement à l'axe de rotation du pédalier X. De manière connue, une vis 46 permet d'assurer un resserrement axial entre les 2 manivelles au travers de l'arbre 4, afin d'assurer une légère précharge axiale sur les roulements à billes.

Le plateau 18 est constitué ici de deux plaques dentées 181 et 182 qui sont fixées par des vis aux extrémités de l'étoile 161, cette étoile fait corps avec le bras de manivelle droite, l'arbre 4 est encastré au centre de l'étoile. Une telle construction est représentée et décrite dans le brevet EP 1449760. De nombreuses innovations ont été apportées ces dernières années à ce type de pédalier afin d'optimiser, l'esthétisme, la masse et la rigidité de ce type de pédalier, l'arbre central est tubulaire avec un diamètre extérieur D4 d'environ 24 mm et ayant une faible épaisseur lui conférant ainsi un haut niveau de résistance et de rigidité tout en étant très léger, les bras de manivelles qui sont très sollicités en flexion et torsion par les efforts de pédalage ont une structure creuse fermée leur conférant également une excellente rigidité spécifique (rapporté à la masse). L'arbre 4 est directement encastré de manière indémontable dans l'étoile à la base de la manivelle droite, l'absence d'élément de liaison démontable tel que vis, rondelle, écrou, clavette, permet d'alléger au maximum ce sous-ensemble. L'arbre de pédalier est généralement métallique en acier ou alliage d'aluminium mais peut être dans certains cas être en matériaux composites avec de préférence des plis orientés à +/- 45° pour bien transmettre le couple de pédalage issu de la manivelle gauche. Les manivelles et l'étoile sont généralement en alliage d'aluminium ou en matériaux composites afin de minimiser leur masse.

De plus ce type de pédalier ayant une manivelle droite monobloc avec l'axe possède le gros avantage d'avoir un temps de maintenance et de montage extrêmement court permettant de réduire les coûts de montage et de réparation.

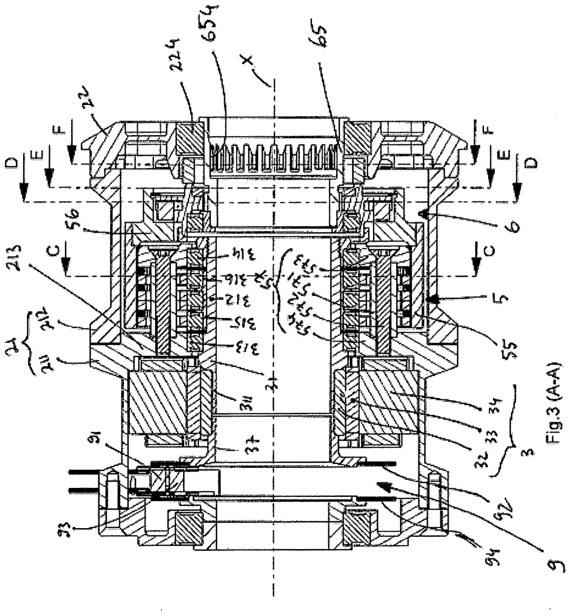

La figure 3 montre une coupe longitudinale dans le plan A-A du carter 21 et des différents composants qui y sont logés.

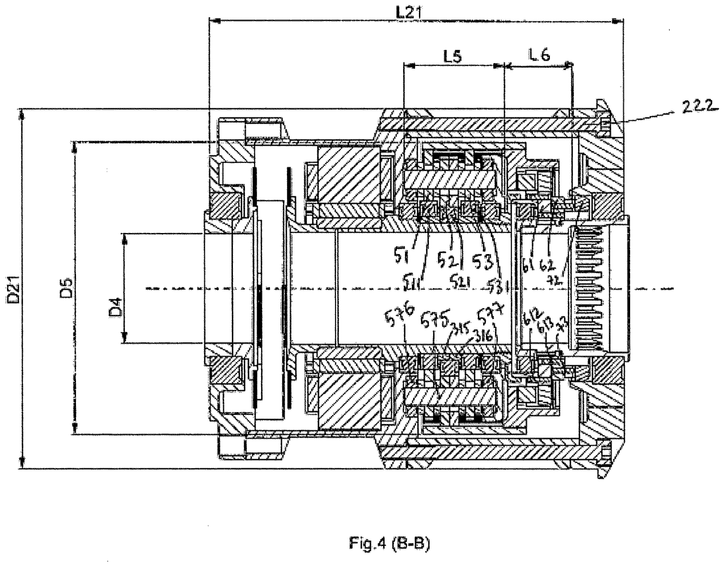

Le carter 21, prévu pour être logé à l'intérieur du boîtier 2, contient la majeure partie des éléments du dispositif d'assistance. Il est immobilisé à l'intérieur du boîtier de pédalier par des vis ou tout autre moyen de fixation équivalent. Il est constitué de deux compartiments juxtaposés, chacun étant fermé par un couvercle. Le compartiment gauche 211 reçoit le moteur 3 et les moyens de mesure 9. Il est fermé, d'un côté, par le couvercle gauche 23 et de l'autre par la paroi centrale 213. Le compartiment droit 212 est fixé contre le compartiment gauche 211 au niveau de la paroi centrale 213. Il reçoit le réducteur 5 et la roue-libre 6. Il est fermé par le couvercle droit 22. La fixation du compartiment droit 212 et du couvercle 22 se fait grâce à des vis longues 222 (visibles en coupe à la figure 4) qui fixent le couvercle 22 à la paroi centrale 213 en prenant en sandwich le compartiment droit.

Des moyens de mesure 9 sont logés à l'intérieur du carter, ces moyens permettent notamment de contrôler et de commander le moteur. Un premier moyen de mesure placé sur le couvercle 22 qui ne sera pas décrit dans le détail permet de mesurer la composante horizontale de l'effort supporté par le roulement à billes 224 situé du côté du pédalier. Cette mesure de composante horizontale est principalement impactée par l'effort de chaîne et permet ainsi de déterminer l'effort de chaîne et donc de remonter au couple total transmis au niveau du pédalier, une autre demande de brevet de la demanderesse décrit comment le couple du cycliste peut ainsi être déduit d'une mesure de couple total, afin que le couple d'assistance soit sensiblement proportionnel au couple transmis par le cycliste.

Un second moyen de mesure est composé d'un premier capteur angulaire 91 associé à premier disque codeur 92 lié à la rotation de l'arbre de pédalier, il permet notamment de détecter la rotation du pédalier ainsi que son sens de rotation afin qu'aucun couple d'assistance ne soit apporté en cas d'action de rétropédalage comme le prévoit la norme en vigueur. Ce capteur sera utile essentiellement lorsque l'assistance ne sera pas active afin de connaître la vitesse et l'accélération du pédalage du cycliste, il sera particulièrement utile pour détecter le démarrage de l'assistance afin de pouvoir la démarrer rapidement, et également détecter l'arrêt du pédalage même si celui-ci pourra également être géré plus finement par un second capteur.

Un troisième moyen de mesure est composé également d'un deuxième capteur angulaire 93, associé à un deuxième codeur 94, lié à la rotation du moteur par l'intermédiaire d'une bague de mesure 37.

Un quatrième moyen de mesure qui se trouve cette fois externe au boîtier en étant situé par exemple près de la roue arrière permet de capter la vitesse d'avancement du vélo afin de permettre de gérer la coupure du couple d'assistance lorsque la vitesse du cycle approche la limite de vitesse programmée afin de répondre à la législation en vigueur.

Le moteur 3 est un moteur électrique triphasé de type brushless multipolaire à rotor central comportant des aimants permanents, Il est alimenté par un contrôleur électronique de puissance lui-même alimenté par une batterie (non représentée) rapportée sur le cadre, ou logée à l'intérieur de celui-ci. Le rotor 32 est solidaire en rotation avec une bague de mesure 37 en regard d'un capteur fixe 93 par rapport au carter 21, permettant de mesurer précisément la position angulaire du rotor relativement au stator, cette information est nécessaire pour permettre au contrôleur de gérer parfaitement le pilotage électrique des 3 phases en fonction de la position du rotor mais aussi de la consigne de couple d'assistance à générer. Ce capteur peut être magnétique de type à effet hall ou à induction ou optique mais il est souhaitable d'avoir une résolution angulaire inférieure à $360/(6.n)$ ou $n$ représente le nombre de paires de pôles du moteur, à titre d'exemple pour un moteur à 10 paires de pôles la résolution angulaire de ce capteur doit être bien inférieure à 6° afin de bien commuter les phases au bon endroit pour une commutation en trapèze, si l'on souhaite piloter le moteur avec une tension sinusoïdale il faudra alors encore accroître cette résolution par au moins un facteur cinq afin de bien phaser le signal sinusoïdal avec l'angle du rotor. L'accès à cette information angulaire très précise du rotor permet en outre de déterminer avec une très grande précision sa vitesse et son accélération angulaire qui sont lorsque le système d'assistance est actif, proportionnels aux vitesse et accélération angulaires du pédalier, la surveillance de ce signal permet donc d'optimiser l'asservissement du pédalage et notamment de détecter rapidement des phases d'arrêt brutal pour agir par exemple sur une procédure d'arrêt d'urgence.

Le moteur 3 est de forme générale annulaire avec un évidement central de diamètre supérieur à D4 de façon à permettre le passage de l'arbre 4 au travers de celui-ci. Le moteur 3, est constitué d'un stator 34 comportant les multiples bobinages des trois phases du moteur, à l'intérieur duquel tourne le rotor 32 ainsi que les aimants 33 fixés sur ce-dernier. Le rotor 32 est également solidaire en rotation avec l'organe moteur 31 dont la fonction est d'entraîner l'arbre 4 au travers du réducteur 5 et de la roue-libre 6. L'organe moteur 31 comporte une première portion 311 montée serrée dans le rotor et une deuxième portion 312 qui constitue la partie centrale du réducteur 5. Deux roulements à billes, 313 et 314 assurent le centrage de l'organe moteur 31 dans le carter 21. Deux excentriques 315 et 316 sont ajustés sur la deuxième portion 312 de l'organe moteur 31 et serrés axialement par un écrou 318 de sorte que le rotor 32, l'organe moteur 31 et les excentriques 315 et 316 soient parfaitement solidaires en rotation.

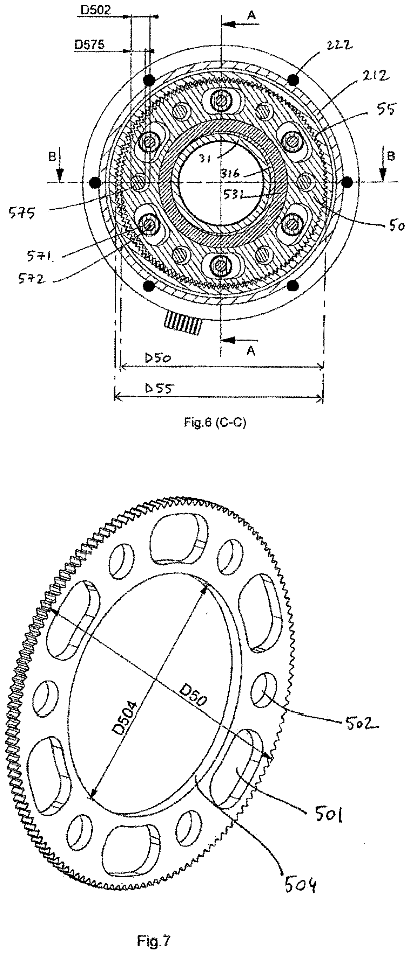

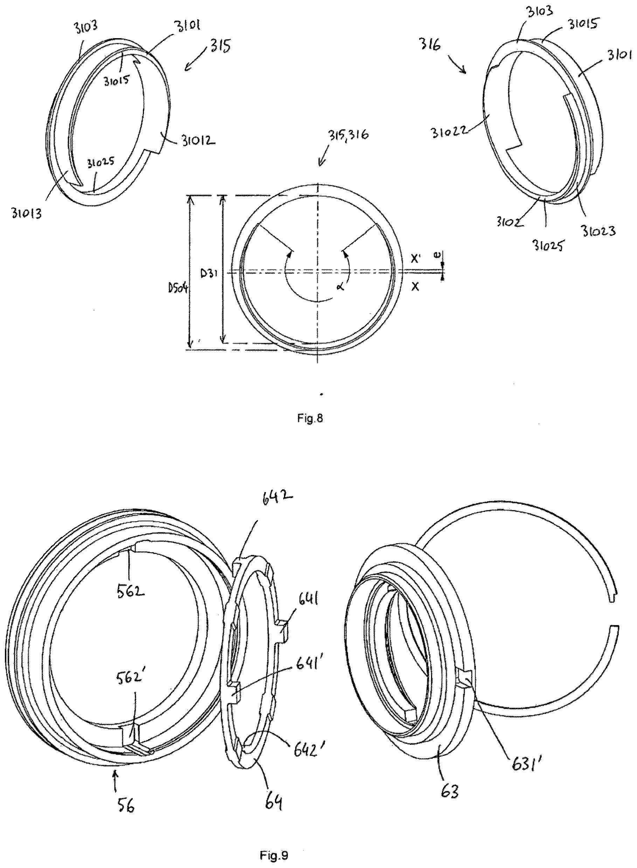

Les excentriques 315 et 316 sont identiques et représentés en perspective à la figure 8. Ils comportent une rondelle 3103 ayant sur chacun de ses flancs une came faisant saillie. Sur le premier flanc, la première came, appelée encore came latérale 3101 fait saillie sur une amplitude angulaire $\alpha$. Elle comprend une surface interne 31012 cylindrique de diamètre D31 et une surface externe 31013 cylindrique de diamètre D504, mais dont l'axe est excentré d'une valeur « e » par rapport à l'axe de la surface interne 31012. On pourra constater géométriquement que le diamètre extérieur D504 doit être supérieur ou égal à la somme du diamètre intérieur D31 et du double de l'excentration « e » (D504 $\geq$ D31 + 2e) pour que ces deux diamètres ne s'intersectent pas. Afin de minimiser l'encombrement radial du réducteur, il est préférable que le diamètre D504 soit juste égal (au jeu fonctionnel près) à la somme de D31 et du double de « e » (D504 = D31 + 2e), dans ce cas les diamètres intérieur D31 et extérieur D504 se retrouvent juste tangents minimisant ainsi l'encombrement radial, la tangence de ces deux diamètres est ainsi bien visible dans la coupe C-C de la figure 6.

En pratique, et pour limiter l'encombrement radial du dispositif d'assistance, il est judicieux de choisir un diamètre D504 de 30 mm.

La rondelle 3103 comporte sur son deuxième flanc, la deuxième came, appelée encore came centrale 3102 faisant saillie sur une amplitude angulaire $\alpha$. Elle comprend une surface interne 31022 cylindrique de diamètre D31 et une surface externe 31023 cylindrique de diamètre D504, et excentrée d'une valeur « e » par rapport à l'axe de la surface interne 31022. L'apex 31015 de la came latérale 3101 et l'apex 31025 de la came centrale 3102 sont diamétralement opposé, cela revient à dire que les deux cames 3101 et 3102 se trouvent déphasées par rapport à l'axe de leur alésage D31 de 180°, c'est-à-dire d'un demi-tour.

On peut noter que l'épaisseur, dans le sens radial, des cames 3101 et 3102, est variable et qu'elle comporte une valeur minimale à ses 2 extrémités angulaires, pour des questions de réalisation technique il est très délicat de terminer par une languette trop fine et trop fragile pour être réalisée ou même manipulée, c'est pourquoi il est préférable de limiter l'angle $\alpha$ afin que l'épaisseur minimale des cames soit supérieure à quelques dixièmes de mm. L'angle $\alpha$ est supérieur à 180° et peut atteindre la valeur de 360°. Dans ce dernier cas, les cames latérale et centrale font saillie depuis toute la circonférence des flancs de la rondelle. Plus l'angle $\alpha$ est petit, plus les excentriques seront légers, mais moins bon sera leur centrage. Dans le mode de réalisation décrit ici et qui constitue un mode préféré, l'angle $\alpha$ vaut environ 260°.

Les excentriques 315 et 316 sont montés en vis à vis de telle manière que la came centrale de l'excentrique 315 soit placée contre la came centrale de l'excentrique 316, leur apex respectif ayant la même position angulaire.

Les excentriques 315, et 316 sont fixés et solidaires en rotation avec l'organe moteur 31. En effet, ces deux excentriques 315 et 316 se trouvent d'une part centrée par leur alésage D31 ajusté sur l'arbre de la deuxième portion 312 de l'arbre moteur 31, mais aussi par leur diamètre extérieur D504 ajusté dans l'alésage du roulement à billes 521 commun, ce double centrage leur impose ainsi de rester bien en phase angulairement l'une par rapport à l'autre.

Ces excentriques peuvent être usinés à partir de barres en alliage d'aluminium pour de faibles quantités ou être injectées sous pression en alliage de zinc de type Zamak pour de plus grandes quantités permettant d'obtenir des pièces très fines et très précises à faible coût.

Le réducteur 5 est de type cycloïdal, c'est à dire qu'il comprend trois composants distincts mobiles en rotation relativement et coaxialement les uns par rapport aux autres, l'un des trois étant maintenu fixe. Celui des composants qui est connecté au moteur est appelé, « entrée » du réducteur, tandis l'autre des composants qui est en rotation coaxiale avec l'entrée est appelé « sortie » du réducteur. Dans le premier mode de réalisation de l'invention, l'entrée du réducteur 5 est constituée par l'organe moteur 31 qui, comme expliqué ci-dessus est solidaire du rotor 32. La sortie du réducteur 5 est quant à elle constituée par une couronne 55 et une bague d'entraînement 56 qui lui est lié solidairement. Entre la sortie et l'entrée du réducteur 5 se trouve le porte-satellite 57.

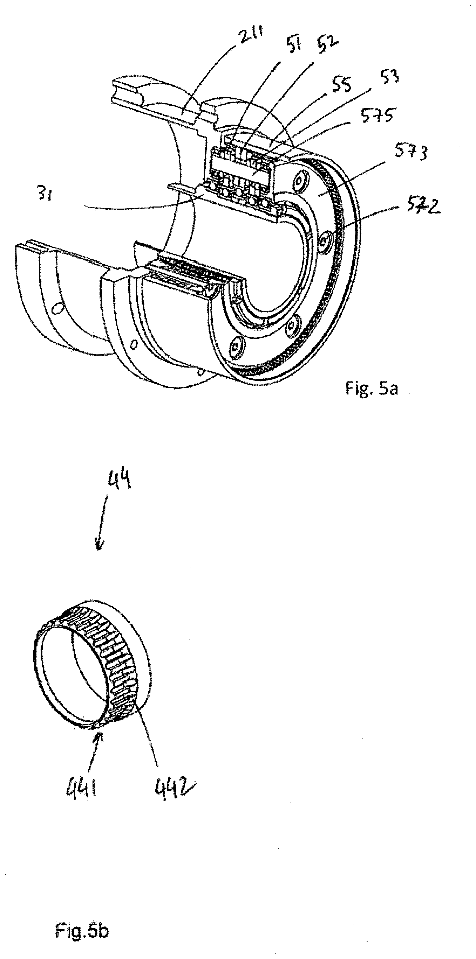

Le porte-satellite 57 est, pour ce premier mode de réalisation, fixe en rotation, il comprend principalement un flasque droit 573 fixé à la paroi centrale par l'intermédiaire de six vis 572 et six entretoises 571. Dans ce mode de réalisation, la paroi centrale 213 constitue le flasque gauche 574 du porte satellite. Un espace, ou cage, est ainsi délimité entre le flasque droit 573 et le flasque gauche 574 (c'est-à-dire la paroi centrale 213). C'est à l'intérieur de cet espace que prennent place les trois satellites 51, 52 et 53. La figure 5, qui est une coupe transversale selon le plan de coupe C-C permet de voir que les six vis 572 et les six entretoises 571 sont régulièrement réparties sur la circonférence.

Le premier et le troisième satellite 51, 53 appelés satellites latéraux, sont identiques et chacun constitués par un unique disque denté 50 visible en perspective à la figure 7. Le deuxième satellite 52, appelé satellite central, est constitué de deux disques dentés 50 identiques et juxtaposés.

Chaque disque denté 50 comprend un alésage central 504 de diamètre D504 et une denture externe 503 de diamètre primitif D50. Il comprend en outre une première série de six larges ouvertures 501, régulièrement réparties à la circonférence. Lorsque les disques 50 sont en place dans le porte-satellite, les larges ouvertures 501 sont traversées par les vis 572 et les entretoises 571.

Les disques dentés comprennent également une deuxième série de six ouvertures circulaires 502, de diamètre D502 régulièrement réparties à la périphérie. Le rôle de ces ouvertures circulaires 502 est visible à la vue de la figure 4 qui est une coupe longitudinale dans le plan B-B et de la figure 6.

Chacune de ses ouvertures circulaires 502 est traversée par un des six petits arbres 575 qui sont montés entre le flasque droit 573 et le flasque gauche 574 à l'aide de petits roulements à billes 576 et 577. Ces petits arbres 575 ont un diamètre extérieur D575 sensiblement égal à D502 moins deux fois la valeur de l'excentricité « e » (D575 + 2e = D502). Bien que les petits arbres 575 soit de diamètre inférieur à celui des ouvertures circulaires 502, ils restent en contact les uns avec les autres à chaque instant. Ces petits arbres 575 étant très sollicités en flexion rotative, ils doivent être suffisamment résistant. Néanmoins, et pour limiter l'encombrement général du dispositif ainsi que le poids, on les choisi de diamètre d'environ 4 mm. Les petits roulements à billes 576 et 577 sont nécessaires afin que la rotation des axes sous charge ne génère quasiment aucune perte par frottement nuisant au rendement du réducteur, ce qui ne serait pas le cas avec un palier lisse frottant.

Les satellites sont montés sur les excentriques 315 et 316 de la façon suivante : le satellite latéral 51 est, monté sur la came latérale 3101 de l'excentrique 315 grâce à un roulement à billes 511. De manière similaire, le satellite latéral 53 est monté sur la came latérale 3101 de l'excentrique 316 grâce à un roulement à billes 531. Le satellite central 52, qui, on le rappelle est deux fois plus épais que les satellites latéraux, car il comprend 2 disques 50 juxtaposés, alors que les satellites latéraux n'en comprennent qu'un seul, est monté sur les cames centrales juxtaposées de l'excentrique 315 et de l'excentrique 316 grâce à un roulement à billes 521. On notera que les rondelles 3103 des excentriques 315, 316 servent d'entretoises entre les bagues internes des roulements 511, 521 et 531. Là aussi, l'usage de roulements à billes, à aiguilles ou à rouleaux est absolument nécessaire afin que la rotation rapide, sous charge, des excentriques relativement aux disques dentés, qui plus est sur un diamètre important, ne génère que très peu de perte et ne nuise pas trop au rendement mécanique du réducteur.

Le montage des satellites 51, 52 et 53 leur impose un engrènement avec la denture interne 551 de la couronne 55, dont le diamètre primitif est D55. De plus, comme ils sont traversés par les petits arbres 575, lesquels ne tournent pas dans un mouvement d'ensemble autour de l'axe X, et, de surcroit, en contact avec ces derniers, leur seul mouvement possible est un mouvement de translation circulaire d'axe X dont la trajectoire est un cercle de rayon égal à « e ». Le mouvement des satellites génère alors une rotation selon l'axe X de la couronne 55.

A la différence d'un train épicycloïdal classique, les trois satellites 51, 52 et 53 ne sont pas répartis régulièrement sur la circonférence, c'est-à-dire séparés l'un de l'autre d'un écart angulaire de 120° par exemple. En effet, le montage de ces derniers sur les excentriques 315, 316 qui, on l'a vu plus haut, ont des cames dont l'apex est diamétralement opposé, fait que, à chaque instant, la position angulaire du point d'engrènement du satellite central 52 avec la couronne 55 est diamétralement opposée avec celle des points d'engrènement des satellites latéraux 51 et 53. Cette configuration a pour effet d'équilibrer tous les efforts et les moments autre que le couple de rotation autour de l'axe X auxquels les trois satellites soumettent la couronne 55 . Comme, d'autre part, la couronne 55 et la bague d'entraînement 56 qui lui est lié sont connectées à la roue-libre par l'intermédiaire d'un joint de Oldham (cf. ci-dessous), on peut dire que la couronne 55 est soumise à un moment pur d'axe X.

En pratique, la rotation du moteur à une vitesse angulaire positive ω1, entraîne la rotation de l'organe moteur 31 et des excentriques 315 et 316 à la même vitesse. Les excentriques génèrent le mouvement spécifique des satellites 51, 52 et 53, lesquels entraînent la couronne 55 dans une rotation positive de vitesse ω2 largement inférieure à ω1.

Le rapport de réduction R est égale à (D55 - D50)/D55. Si on exprime le rapport de réduction R avec le nombre des dents Z2 de la couronne 55 et le nombre de dents Z3 des satellites, nous avons les formules suivantes :

[Math. 1]

$$R = \frac{D55 - D50}{D55} = \frac{Z55 - Z50}{Z55}$$

Avantageusement, on choisira un rapport de réduction compris entre 1/30 et 1/60. Au-dessus de 1/30, le moteur utilisé devra être susceptible de fournir un couple important, ce qui implique que son circuit magnétique devra être également important et par conséquent plutôt lourd. L'utilisation d'un rapport de réduction inférieur à 1/60, implique l'utilisation d'un moteur qui tourne très vite et dans lequel les pertes par courants de Foucauld deviennent importantes, ce qui en dégrade considérablement le rendement.

Dans le mode de réalisation décrit ici, nous avons R = 1/46 (Z55 = 138, Z50 = 135).

Sachant que l'excentration « e » est définie comme étant égale à (D55- D50)/2, on peut déduire que : e = R x D55/2. Dans le mode de réalisation décrit, nous avons e = 0.7 mm.

Les dentures représentées sur ce premier mode de réalisation sont des dentures droites en développante de cercle ayant un module de denture égal à 14/30 (environ 0,467 mm) la couronne extérieure 55 ayant 138 dents a donc un diamètre primitif de 64,4 mm, les pignons satellites 51,52 et 53 possèdent 135 dents et ont donc un diamètre primitif de 63 mm, comme ces 2 engrenages ont des diamètres primitifs très voisins, leur engrènement pose quelques problèmes de conception afin que leurs dents s'engrènent sans interférence, ainsi une définition de denture normalisée, accessible à l'homme de l'art, avec un angle de poussée à 20° et une saillie de dent égale au module et un creux de dent égal à 1,25 fois le module, soit une hauteur de dent de 2,25 fois le module, ne convient absolument pas pour ce type de réducteur de par les interférences de dentures bloquant l'engrènement à son entrée et à sa sortie, ce problème a été résolu dans notre cas en utilisant un petit module de 14/30 de mm, un angle de poussée égal (ou supérieur) à 31° et une saillie de dent égale (ou inférieure) à 0,9 fois le module avec un creux de dent égal à une fois le module, qui doit être nécessairement strictement supérieur à la saillie de l'autre pignon engrené,. Il faut noter qu'il est préférable de limiter l'angle de poussée, dans les limites de non-interférence, afin de minimiser les composantes radiales engendrées et maximiser ainsi le rendement du réducteur. L'augmentation de l'angle de poussée réduit l'angle de conduite théorique de la denture, mais l'étude de déformation de denture par éléments finis montre que de très nombreuses dents viennent malgré cela en contact pour transmettre l'effort de denture car le nombre de dents très voisins entre le pignon 51, 52 et 53 ayant cent trente-cinq dents et la couronne 55 ayant cent trente-huit dents conduisent à des profils très voisins s'engrenant sur un très grand nombre de dents et avec des contacts de faible courbure et de signe de courbure opposés (pignon avec profil de dent convexe et couronne avec profil de dent concave) donnant ainsi de très faibles pressions de contact, permettant ainsi de transmettre des couples élevés tout en ne générant que très peu de vibration et de bruit.

La problématique d'interférence de denture est liée à la hauteur de saillie de la dent ainsi qu'à l'angle de poussée, il est donc très favorable d'ajouter des dents en réduisant le module, le compromis trouvé ici n'a rien de trivial pour l'homme de l'art et doit être optimisé pour chaque ratio de réduction désiré, sachant que la problématique d'interférence est moins critique pour un ratio de 1/30 que pour un ratio de 1/45, avec un ratio de 1/30 on pourra diminuer l'angle de poussée et ou augmenter la saillie de la dent.

Le meilleur compromis rendement/encombrement a été atteint avec un réducteur dont la couronne 55 et les satellites 51, 52 et 53 ont trois dents d'écart. En pratique dans le mode de réalisation décrit ici, Z55 le nombre de dents de la couronne est de cent trente-huit et Z50 le nombre de dents des satellites est de cent trente-cinq.

Un autre type d'engrènement assez usuel dans les réducteurs cycloïdaux pourrait être adopté en utilisant dans notre exemple quarante-six petits axes dans la couronne engrenant avec quarante-cinq dents cycloïdales réalisées dans chacun des pignons ou réciproquement, quarante-cinq petits axes dans chaque couronne entraînant avec quarante-six dents cycloïdales dans la couronne, ce type de dentures comportant de très nombreuses petites pièces, conduit aussi à avoir un angle de poussée plus ouvert augmentant la charge radiale sur les roulements, augmentant également la pression de contact sur la denture ainsi que l'encombrement global, mais ce type de construction est toutefois réalisable.

Les pignons satellites sont sollicités au niveau du contact de la denture mais également dans les ouvertures circulaires 502 dans lesquels roulent sans glisser les petits arbres 575, ce contact engendre une pression de contact relativement élevée et nécessite un niveau de dureté suffisant des petits arbres 575 mais également dans les ouvertures circulaires 502 des pignons satellites 51, 52 et 53 qui pourront être réalisés en acier prétraité ou trempé ou en acier cémenté ou avec une nitruration très favorable à ce type de contact.

Dans une autre variante les pignons peuvent être réalisés en thermoplastique en ajoutant un insert métallique à chaque ouverture circulaire afin de mieux supporter la pression des petits arbres, il faudra toutefois élargir les pignons afin que les dents soient suffisamment résistantes.

Le motoréducteur présenté dans ce premier mode de réalisation permet de transmettre un couple d'assistance continu de 30 N.m à une vitesse de rotation de 100 tr/min ce qui correspond à une puissance continue d'environ 315 Watt, son encombrement est très limité puisque le carter externe fait une longueur totale de 90 mm et que son diamètre extérieur inséré dans le cadre mesure seulement 79 mm. La longueur L5 de son réducteur mesure 23,5 mm alors que la longueur totale L5+L6 incluant le réducteur et le mécanisme de roue-libre ne mesure que 36,7 mm. La masse du réducteur ne fait que 345 g (hors mécanisme de roue-libre) alors que la masse du moteur pèse 260 g et que la masse totale du carter (moteur, réducteur, roue libre, moyens de mesure) pèse environ 950 g, donc largement inférieur à 1,5 kg.

Le motoréducteur présenté dans ce premier mode de réalisation permet de transmettre un couple d'assistance continu de 30 N.m à une vitesse de rotation de 100 tr/min ce qui correspond à une puissance continue d'environ 315 Watt, son encombrement est très limité puisque le carter externe fait une longueur totale de 90 mm et que son diamètre extérieur inséré dans le cadre mesure seulement 79 mm. La longueur L5 de son réducteur mesure 23,5 mm alors que la longueur totale L5+L6 incluant le réducteur et le mécanisme de roue-libre ne mesure que 36,7 mm. La masse du motoréducteur ne fait que 345 g alors que la masse du moteur pèse 260 g et que la masse totale du boîtier motoréducteur pèse moins de 950 g.

Avantageusement, dans ce mode de réalisation la disposition des deux disques externes qui se trouvent excentrés en opposition de phase relativement aux deux disques jumelés centraux, assure un équilibrage dynamique parfait ne générant ainsi aucune vibration ou bruit parasite.

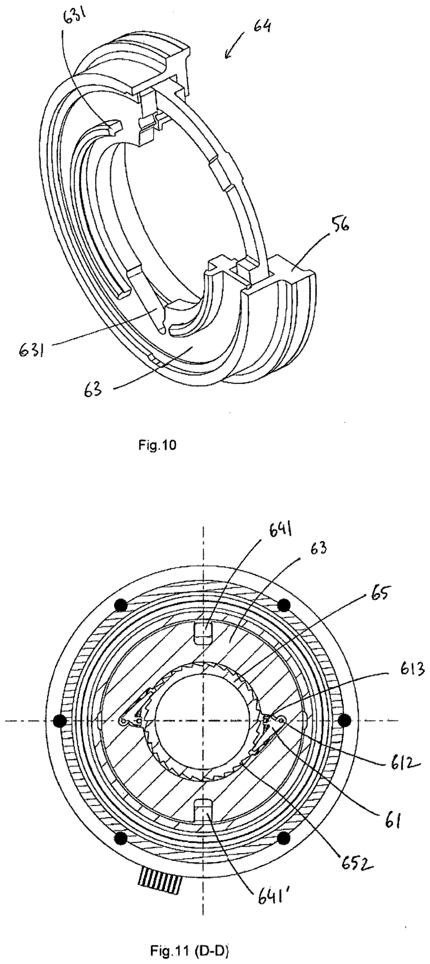

La sortie du réducteur est reliée à l'arbre 4 par l'intermédiaire de la roue-libre 6. Pour absorber de léger défaut de décentrage entre la rotation de la bague d'entraînement 56 et le corps de roue-libre 63, on place un joint de Oldham 64 entre ces deux éléments (cf. figure 9 et 10). Le joint de Oldham 64, se présente sous la forme d'une bague comportant sur une de ses faces deux protubérances droites 641, 641' diamétralement opposées l'une à l'autre, et sur son autre face deux autre protubérances gauche 642, 642', également diamétralement opposées l'une à l'autre. Le diamètre sur lequel se placent les protubérances droites et celui sur lequel se trouve les protubérances gauches sont perpendiculaires. Les protubérances droites 641, 641' sont reçues dans les logements droits 631, 631' ménagés dans le corps de roue-libre 63 ayant une forme complémentaire aux protubérances et les protubérances gauches 642, 642' sont reçues dans des logements gauches 562, 562' ménagés dans la bague d'entraînement 56.

Ce joint d'Oldham peut être réalisé dans un matériau ayant des propriétés amortissantes afin de filtrer les éventuels défauts d'engrènement des dentures ainsi que les éventuelles variations de couple engendrées par le moteur afin de limiter le bruit émis par le motoréducteur.

Dans ce premier mode de construction, la rotation du moteur est certes globalement coaxiale à l'arbre central du pédalier mais son montage de roulement ne prend nulle part référence à cet arbre central de pédalier, ainsi le centrage du rotor dans le stator qui doit être très précis de par le très faible jeu d'entrefer régnant entre le rotor et le stator s'en trouve très bien assuré et totalement indépendant des charges élevées pouvant solliciter et déformer l'arbre central., le joint d'Oldham a ici pour fonction d'associer les deux sans superposer de contraintes d'hyperstatisme.

La roue-libre 6 va maintenant être décrite en détail. Elle comprend de manière classique deux cliquets 61 et une bague de synchronisation 62. Les cliquets 61 sont montés pivotants autour de petits axes 612 à l'intérieur d'un logement 631 ménagé dans le corps de roue-libre 63. Les cliquets 61 pivotent entre une position « engagée » (non représentée), dans laquelle leur extrémité distale est en prise avec une des dents 652 ménagées sur le rochet 65, et une position « dégagée » représentée à la figure 11 (coupe D-D).

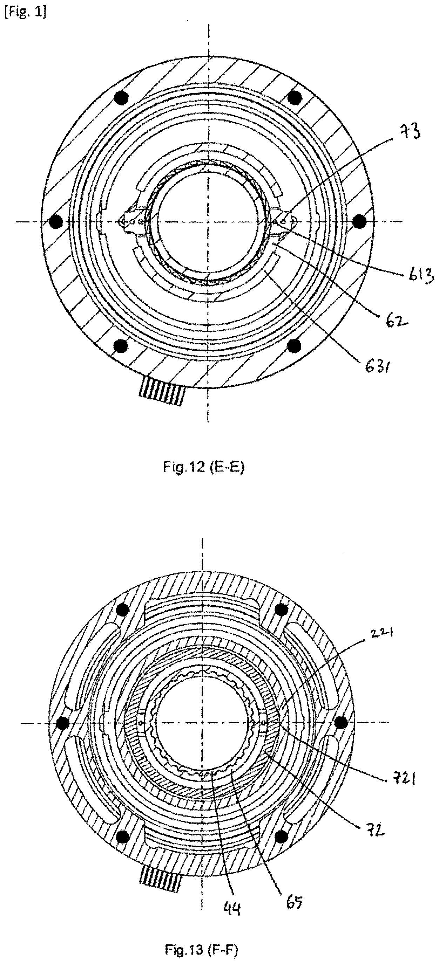

Une bague de synchronisation 62 (cf. figure 12) synchronise le mouvement de basculement des deux cliquets 61. Cette bague est reliée aux cliquets par deux goupilles 613. Elle est montée pivotante autour de l'axe X grâce à un rebord 631 qui la guide et maintien par clipsage contre le corps de roue libre 63. La bague de synchronisation 62 a une petite amplitude de rotation par rapport au corps de roue-libre 63. En effet, la bague de synchronisation est fixée aux cliquets à une distance de quelques millimètres de leur point de pivotement si bien que le pivotement des cliquets 61 autour des petits axes 612 entraîne un déplacement de quelques degrés des goupilles 613.

Les deux cliquets 61 sont opposés à 180° permettant d'équilibrer les efforts transmis en transmettant, en théorie, un couple pur sans composante radiale, et en divisant sensiblement par deux, l'effort transmis par chacun des cliquets. Les cliquets ont de préférence une extrémité avec un bec engageant avec des dents 652 ménagées sur le rochet 65. Ainsi, dès que l'extrémité du cliquet vient au contact du rochet 65, le cliquet va alors continuer sa course pour s'engager automatiquement en fond de dent malgré les frottements s'opposant à son engagement, leur permettant de rester parfaitement stables une fois engagés, la bague de synchronisation 62 montée en pivot sur la sortie du réducteur permet de synchroniser la rotation de ceux-ci afin qu'ils s'engagent bien simultanément.

La roue-libre comprend également des moyens qui permettent de piloter les cliquets 61, et notamment de les maintenir en position dégagée. Ces moyens comprennent une bague de friction 72 et deux goupilles 73. La figure 13 montre la géométrie et le fonctionnement de la bague de friction 72. La bague de friction est un anneau élastiquement déformable qui vient en appui précontraint sur une partie fixe du dispositif sur au moins deux zones. Dans le mode de réalisation représenté, la partie fixe est un fût cylindrique 221, faisant saillie depuis la face intérieure du couvercle 22. Cette bague comporte deux bourrelets 721 diamétralement opposés ménagés sur la face intérieure de la bague. Ces bourrelets sont prévus pour venir glisser sur la surface intérieure du fût 221 issu du couvercle 22. La bague de friction 72 est solidaire en rotation de la bague de synchronisation 62 par l'intermédiaire de deux goupilles 73 s'insérant dans deux trous radialement oblongs diamétralement opposés. Pour assurer un certain serrage de la bague de friction sur le fût 221, le diamètre extérieur entre les deux bourrelets est, à l'état libre, légèrement supérieur d'environ 0,5 mm au diamètre extérieur du fût 221. La mise en place de la bague de friction générera une certaine ovalisation de cette dernière, la géométrie de cette bague de friction doit être dimensionnée pour générer deux efforts radiaux diamétralement opposés lors de son ovalisation de 0,5 mm sans engendrer de contraintes élevées sur cette dernière afin qu'elle puisse supporter ce niveau de contrainte sans fluage durant toute la durée de vie du produit. On pourra choisir un matériau de type PBT ou POM pour réaliser la bague car cette pièce de frottement doit avoir une très bonne résistance à l'usure, et une très bonne élasticité ainsi qu'un bon comportement à la température de fonctionnement pour garantir une très bonne stabilité de sa précontrainte de serrage sur toute la durée de vie d'utilisation du produit.

Le serrage diamétral de cette bague de friction 72 sur le fût 221 va induire un couple de frottement stable et maîtrisé s'opposant à la rotation de cette dernière par rapport au fût 221 lui-même lié au boîtier du cadre 1.

A titre d'exemple, on obtient un très bon fonctionnement en dimensionnant la bague de friction pour obtenir deux efforts radiaux diamétralement opposés au niveau des bourrelets de friction d'environ 5N sous un serrage diamétral de 0,5 mm avec un niveau de contrainte de moins de 10 MPa sur cette dernière, évitant ainsi tout risque de relaxation ou fluage dans le temps, ces efforts radiaux générés sur le fût de diamètre 35 mm permettent de générer un couple de frottement d'environ 25 mN.m dans les deux sens de rotation, largement suffisant pour engager et désengager les cliquets, tout en générant un couple suffisamment faible pour ne pas induire de perte de puissance significative lors du glissement de cette dernière, puisque ce couple de frottement de 25 mN.m ne génère une perte que de 0,2 Watt à 80 tour par minute, ce qui est négligeable devant la puissance d'assistance et qui ne permet pas d'échauffer et d'user la zone des bourrelets en contact avec le fût 221.

La transmission de couple entre le rochet 65 et l'arbre 4 passe par la bague cannelé 44 visible en perspective à la figure 5b. Cette dernière comporte une portion cannelée 441 et une portion tronconique 442, cette portion tronconique d'angle d'environ 15° est suffisamment ouvert pour être réversible et être aisément démontable sans avoir besoin d'un extracteur, mais pas trop ouvert non plus pour assurer un très bon centrage radial de l'arbre du pédalier sous l'effort axial modéré de la vis 46 qui a permis de précharger le montage avant le blocage des deux vis 162.

Le fonctionnement du dispositif d'assistance va maintenant être décrit en détail.

Dans une première phase, le cycliste souhaite être assisté avec le moteur électrique. Il a mis en marche le dispositif d'assistance et éventuellement choisi le niveau d'assistance. Le rotor du moteur va commencer à tourner dans le sens positif. La sortie du réducteur va alors entraîner dans le sens positif (sens normal de pédalage repéré avec un signe + sur les figures) à une vitesse 46 fois plus réduite que le moteur, la bague de synchronisation 62 qui va également entraîner en rotation dans le même sens avec elle la bague de friction 72, le frottement de ses deux bourrelets 721 sur le fût du couvercle 22 va générer un couple de frottement qui va être transmis à la bague de synchronisation 62. Comme cette dernière a une faible amplitude de rotation relative par rapport à la bague d'entraînement 56, le couple de frottement aura pour effet de la forcer dans le sens opposé au déplacement et donc à la faire tourner en arrière relativement à la sortie du réducteur. Cette rotation relative tend à faire pivoter les cliquets dans leur sens d'engagement provoquant la connexion en rotation du moteur avec l'arbre d'entraînement 4. La roue libre est alors engageante et l'accouplement en rotation va être très vite assurée après la petite phase transitoire d'accostage que nous venons de décrire, pour assurer un accostage en douceur et sans bruit, il est préférable de limiter le courant moteur durant un court moment à chaque reprise d'assistance afin d'assurer un accostage en douceur et sans bruit, pour améliorer cette phase d'accostage il est également préférable de réduire le pas angulaire des dents 652 du rochet 65, comme on peut le constater sur la coupe de la figure 6, il est tout à fait possible d'intégrer 32 dents 652 sur le rochet 65 ce qui permet d'assurer un pas d'engagement limité (11, 25°) et donc un accostage souple et rapide. Une fois accouplé, les deux cliquets sont bien engagés de manière stable en fond de dents, cela correspond à l'état 1 de la roue libre 6, dit état d'assistance, ou encore au mode de pédalage avec assistance (phase 2) lorsque le cycliste ne pédale pas plus vite que l'assistance fournie par le moteur.

Dans le cas où le cycliste augmente sa fréquence de pédalage jusqu'à dépasser la vitesse de sortie de réducteur (phase 3), les dents 652 du rochet 65 vont lever les cliquets 61 à chaque passage de dents et aucun couple ne sera transmis entre la bague d'entraînement et l'arbre 4. La roue libre est alors glissante. Il s'agit là du fonctionnement classique d'une roue libre. Cela correspond à l'état 2, dite état de roue-libre, de la roue libre 6. Nous pouvons noter que lorsque le cliquet va être levé par une dent 652 du rochet 65, la bague de synchronisation 62 et la bague de friction 72 vont alors prendre un peu d'avance relativement à la bague d'entraînement mais le couple de frottement de la bague de friction provoqué par le frottement des bourrelets 721 sur le couvercle 22 restera sensiblement constant provoquant le ré-engagement immédiat des cliquets dès que la dent 652 sera passée, ainsi dans cette phase de roue-libre, la bague de frottement agit de manière analogue aux ressorts de rappel des roues libres à cliquets conventionnels.

Maintenant, si le cycliste décide de rétropédaler (phase 5), l'arbre 4 qui tourne dans le sens négatif va entraîner, par l'intermédiaire des cliquets, la bague d'entraînement 56 et la bague de friction 72. Le frottement des bourrelets 721 avec le couvercle 221 génère un couple de frottement qui s'oppose à la rotation et fait tourner la bague de synchronisation relativement à la bague d'entraînement jusqu'à ce que les deux cliquets se lèvent rendant impossible l'accouplement moteur. La roue-libre est alors à l'état 3, dit état de déconnexion, comme représenté à la figure 10.

En fait, ce débrayage des cliquets est lié au sens de rotation relatif entre la couronne du réducteur et le couvercle du boîtier de pédalier (fixe), ainsi on pourra contrôler l'engagement des cliquets en pilotant le sens de rotation du moteur de sorte qu'il suffise d'ordonner une petite rotation arrière du moteur pour faire pivoter la bague d'entraînement 56 d'au moins quelques degrés vers l'arrière, c'est-à-dire dans le sens négatif, pour débrayer la roue libre.

Dans la pratique, si le cycliste est en marche avant avec une assistance du moteur (phase 2), les cliquets sont alors engagés. A partir de cet état, si le cycliste décide de faire brutalement marche arrière (phase 5), ou d'arrêter de pédaler pour pouvoir stopper (phase 4), comme les cliquets ont des becs engageants, il peut être possible que les cliquets ne puissent pas se dégager facilement malgré le couple de frottement appliqué sur la bague de synchronisation, pour cela il est souhaitable qu'un microcontrôleur de commande (non représenté) puisse détecter cet événement soit par un capteur de couple de pédalage (non représenté) qui devient subitement nul ou négatif, soit par une vitesse de rotation du pédalier nulle détectée par un capteur angulaire (non-représenté), soit par une forte décélération angulaire ou encore par une inversion du sens de rotation du moteur ou du pédalier et ordonner alors une rotation arrière du moteur avec une accélération arrière plus importante que celle du cycliste pendant une fraction de tour ce qui va désengager les cliquets et permettent leur soulèvement, cette marche arrière pourra être stoppée quasi immédiatement et la roue-libre restera alors dans cet état stable désengagé sans induire le moindre frottement ou le moindre bruit supplémentaire pour le cycliste.

Enfin, lorsque le cycliste décide de se passer d'assistance ou que la batterie est épuisée (phase 1), le microcontrôleur ordonnera une rotation en marche arrière du moteur afin de placer la roue libre en l'état désengagé. Ainsi la présence du dispositif d'assistance n'induit aucun frottement ou bruit supplémentaire.

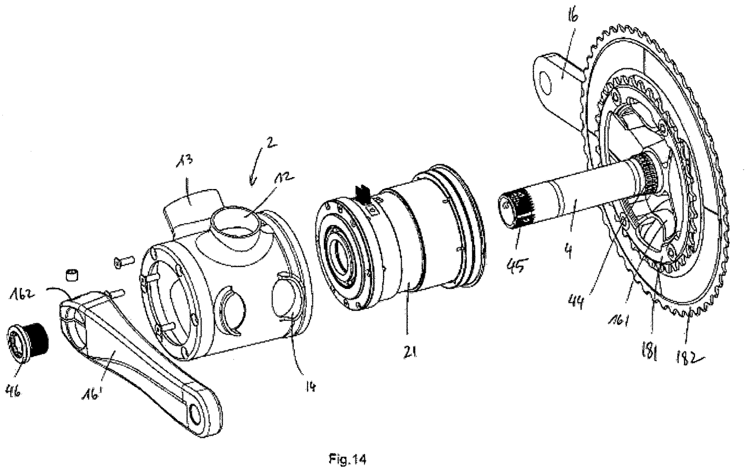

La figure 14 montre une vue éclatée du dispositif d'assistance selon un deuxième mode de réalisation de l'invention. Le boîtier de pédalier 2 qui fait partie intégrante du cadre et relie un certain nombre de tube qui le constitue. On peut voir la partie inférieure du tube oblique 13, la partie inférieure du tube de selle 12 et les extrémités antérieures des pattes arrière 14. Le carter 21 contenant un certain nombre des composants du dispositif d'assistance est prévu pour être logé à l'intérieur du boîtier de pédalier 2.

Le pédalier, lui-même, comporte la manivelle gauche 16', un sous-ensemble constitué de l'arbre 4, la manivelle droite 16 et l'étoile 161. La manivelle droite 16 et l'étoile 161 sont de préférence une seule et même pièce fixée de manière permanente à l'arbre 4. Une bague cannelée 44 est fixée sur l'arbre à proximité de l'étoile 161, le mode de liaison entre la bague cannelée 44 est l'arbre 4 est totalement identique au premier mode de réalisation précédemment décrit

Des cannelures 45 sont ménagées à l'extrémité distale de l'arbre 4. Ces cannelures servent à la transmission de couple de la manivelle gauche 16' vers l'arbre 4. La manivelle gauche 16' est serrée contre l'arbre grâce à des vis 162 disposés perpendiculairement à l'axe de rotation du pédalier X. De manière connue, une vis 46 permet d'assurer un resserrement axial entre les 2 manivelles au travers de l'arbre 4, afin d'assurer une légère précharge axiale sur les roulements à billes exactement comme pour le premier mode de réalisation.

Le plateau 18 est constitué ici de deux plaques dentées 181 et 182 qui sont fixées par des vis aux extrémités de l'étoile 161 comme pour le premier mode de réalisation.

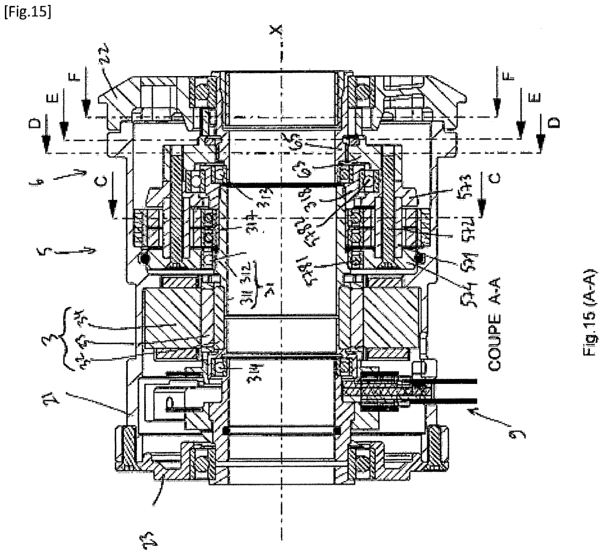

La figure 15 montre une coupe longitudinale dans le plan A-A du carter 21 et des différents composants qui y sont logés. On notera que le dispositif d'assistance est représenté sur cette vue avant que le pédalier y soit monté, c'est-à-dire avant que le sous ensemble comprenant l'arbre 4, le plateau et la manivelle droite ne soit inséré dans l'alésage central, la bague cannelée 44 étant néanmoins placée à l'intérieur du rochet 65.

Le carter 21, prévu pour être logé à l'intérieur du boîtier 2, contient la majeure partie des éléments du dispositif d'assistance. Il est constitué d'un corps tubulaire 214 fermé, d'un côté par le couvercle droit 22 et de l'autre côté par le couvercle gauche 23. Il reçoit le moteur 3, les moyens de mesures 9, le réducteur 5 et la roue-libre 6.

Le moteur 3 est un moteur électrique. Il est alimenté de préférence par une batterie (non représentée) rapportée sur le cadre, ou logée à l'intérieur de celui-ci. Le moteur 3, est constitué d'un stator 34 à l'intérieur duquel tourne le rotor 32 ainsi que les aimants 33 fixés sur ce-dernier. Le rotor 32 est solidaire en rotation avec l'organe moteur 31 dont la fonction est d'entraîner l'arbre 4 au travers du réducteur 5 et de la roue-libre 6. L'organe moteur 31 comporte une première portion 311 montée serrée dans le rotor et une deuxième portion 312 qui constitue la partie centrale du réducteur 5. Deux roulements à billes, 313 et 314 assurent le centrage de l'organe moteur 31, de son côté droit le roulement 313 est centré sur l'extrémité du rochet 65 et de son côté gauche le roulement 314 est centré sur l'extrémité de la bague dans le carter 21. Un excentrique 317 est monté centré sur la deuxième portion 312 de l'organe moteur 31 et serré axialement par un écrou 318, de sorte que le rotor 32, l'organe moteur 31 et l'excentrique 317 soient parfaitement solidaires en rotation.

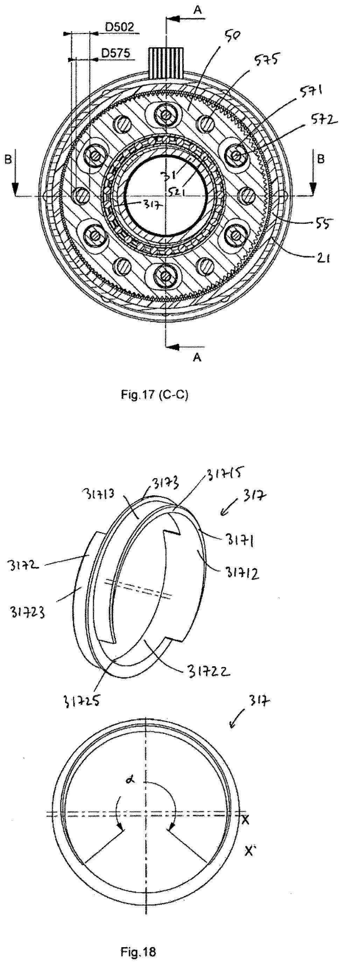

L'excentrique 317 est perspective à la figure 18. Il comporte une rondelle 3173 ayant sur chacun de ses flancs une came faisant saillie. Sur le premier flanc, la première came, appelée également came droite 3171 fait saillie sur une amplitude angulaire $\alpha$. Elle comprend une surface interne 31712 cylindrique de diamètre D31 et une surface externe 31713 cylindrique de diamètre D50, mais dont l'axe est excentré d'une valeur « e » par rapport à l'axe de la surface interne 31712. Sur le deuxième flanc, la deuxième came, appelée également came gauche 3172 fait saillie sur une amplitude angulaire $\alpha$. Elle comprend une surface interne 31722 cylindrique de diamètre D31 et une surface externe 31723 cylindrique de diamètre D50, et excentrée d'une valeur « e » par rapport à l'axe de la surface interne 31722.

Comme dans le premier mode de réalisation pour optimiser l'encombrement radial, il est souhaitable que le diamètre extérieur D504 soit égal à la somme du diamètre intérieur D31 et de deux fois l'excentrique « e » soit (D504 = D31 + 2e). Ainsi les diamètres D31 et D51 se retrouvent tangents permettant à la deuxième portion 312 de l'organe moteur 31 de s'insérer tangentiellement sous les deux roulements à billes 511 et 521 leur assurant un positionnement précis malgré un appui angulaire partiel d'un angle α sur chacune de leur came comme visible dans la coupe C-C de la figure 17.

L'apex 31715 de la came droite 3171 et l'apex 31725 de la came gauche 3172 sont diamétralement opposé de sorte que les cames soient déphasées d'un demi-tour. L'angle α est supérieur à 90° et peut atteindre la valeur de 360°. Dans ce dernier cas, les cames droite et gauche font saillie depuis toute la circonférence des flancs de la rondelle. Plus l'angle α est petit, plus les excentriques seront légers. Cette configuration de la came est identique à celles qui ont été décrite pour le premier mode de réalisation de l'invention. La différence réside dans le fait qu'il n'y a plus deux excentriques pour trois satellites, mais un seul excentrique pour deux satellites.

Comme dans le mode de réalisation précédent, le réducteur est de type cycloïdal et l'entrée du réducteur étant constitué par l'organe moteur 31. A la différence du réducteur du premier mode de réalisation de l'invention, la couronne 55 est ici l'élément maintenu fixe du réducteur et la sortie de celui-ci est constituée par le porte satellite 57.

Le porte-satellite 57 est monté rotatif par l'intermédiaire de deux roulements à billes 5781, 5782. Il comprend principalement un flasque droit 573 et un flasque gauche 574 reliés l'un à l'autre par l'intermédiaire de six vis 572 et six entretoises 571. Un espace, ou cage, est ainsi délimité entre le flasque droit 573 et le flasque gauche 574. C'est à l'intérieur de cet espace que prennent place le satellite gauche 51' et le satellite droit 52'. La figure 18, qui est une coupe transversale selon le plan de coupe C-C permet de voir que les six vis 572 et les six entretoises 571 sont régulièrement réparties sur la circonférence.

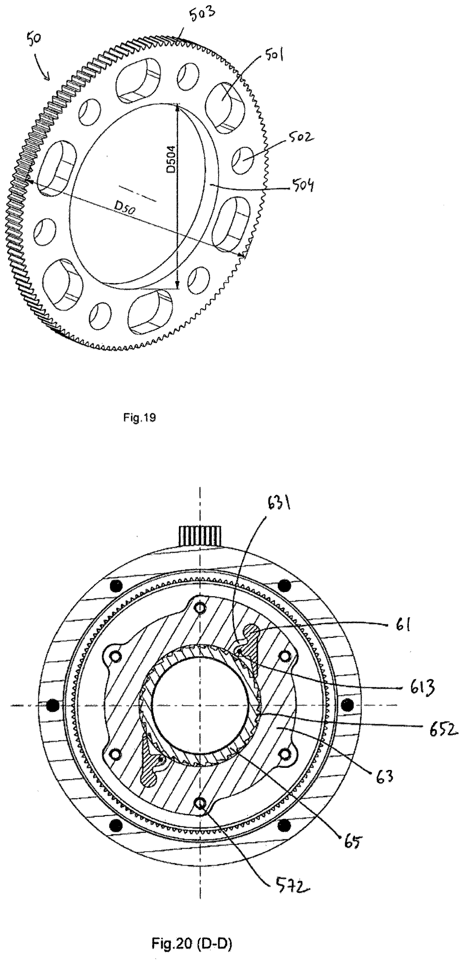

Les deux satellites 51' et 52' sont chacun constitués par un unique disque denté à denture externe 50 semblable au disque à denture externe décrit pour le premier mode de réalisation de l'invention et visible en perspective à la figure 19. Chaque disque denté 50 comprend un alésage central 504 de diamètre D504 et une denture externe 503 de diamètre primitif D50. Il comprend en outre une première série de six larges ouvertures 501, régulièrement réparties à la circonférence. Lorsque les disques 50 sont en place dans le porte-satellite, les larges ouvertures 501 sont traversées par les vis 572 et les entretoises 571.

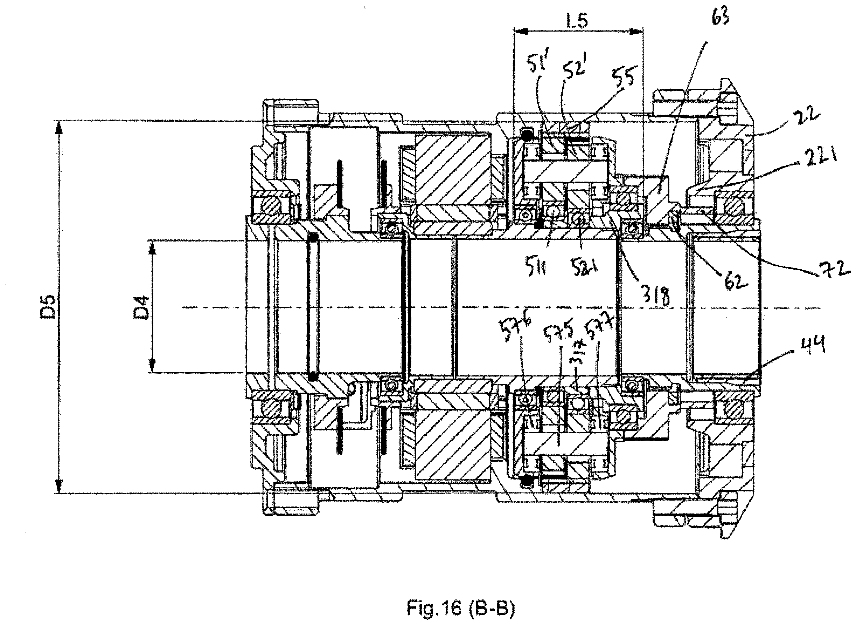

Les disques dentés comprennent également une deuxième série de six ouvertures circulaires 502, de diamètre D502 régulièrement réparties à la périphérie. Le rôle de ces ouvertures circulaires 502 est visible à la vue de la figure 16 qui est une coupe longitudinale dans le plan B-B et de la figure 17.

Chacune de ses ouvertures circulaires 502 est traversée par un des six petits arbres 575 qui sont montés entre le flasque droit 573 et le flasque gauche 574 à l'aide de petits roulements à billes 576 et 577. Ces petits arbres 575 ont un diamètre extérieur D575 sensiblement égal à D502 moins deux fois la valeur de l'excentricité « e » (D575 + 2e = D502). Bien que les petits arbres 575 soit de diamètre inférieur à celui des ouvertures circulaires 502, ils restent en contact les uns avec les autres à chaque instant en permettant un contact linéique sans glissement provoquant la rotation continue des petits arbres 575 sur eux-mêmes supportés à leurs deux extrémités par les petits roulements à billes 576 et 577, n'engendrant ainsi quasiment aucune perte de puissance au niveau de ce contact comme pour le premier mode de réalisation.

Avantageusement, les roulements 576, 577 sont logés sur chacun des flasques 573, 574, donc à l'extérieur des disques 50. Ainsi, on minimise l'encombrement radial et la compacité du réducteur

Les satellites sont montés sur l'excentrique 317 de la façon suivante : le satellite gauche 51' est monté sur la came gauche 3172 de l'excentrique 317 grâce à un roulement à billes 511. De manière similaire, le satellite droit 52' est monté sur la came droite 3171 de l'excentrique 317 grâce à un roulement à billes 521. Là encore, l'usage de roulements à billes, à aiguilles ou à rouleaux est absolument nécessaire afin que la rotation rapide, sous charge, des excentriques relativement aux disques dentés, qui plus est sur un diamètre important, ne génère que très peu de perte et ne nuise pas trop au rendement mécanique du réducteur.

On notera que la rondelles 3173 de l'excentrique 317 sert d'entretoise entre les bagues internes des roulements 511 et 521, et un écrou 318 vissé en bout d'organe moteur vient serrer axialement tout cet assemblage afin d'entraîner par adhérence les excentriques avec l'organe moteur, nous pouvons noter que le couple d'entrée du réducteur est ici très faible comparativement au couple de sortie puisqu'il ne représente qu'environ 2% du couple de sortie (rapport de réduction voisin de 50).

Le montage des satellites 51' et 52' leur impose un engrènement avec la denture interne 551 de la couronne 55, dont le diamètre primitif est D55. D'autre part, le mouvement de rotation de l'excentrique impose une rotation décentrée des satellites. Ces deux contraintes génèrent un mouvement combinant une rotation angulaire de rayon « e » et une rotation autour de l'axe X. Comme les ouvertures circulaires 502 des satellites sont traversés par les petits arbres 575, à l'intérieur desquelles lesquel le mouvement de rotation angulaire peut prendre place, le mouvement des satellites va générer un mouvement de rotation de sens opposé autour de l'axe X des petits arbres 575 et donc du porte-satellite 57.

Comme il a été vu plus haut, les cames 3171 et 3172 ont leur apex respectif diamétralement opposés. Si bien que, à chaque instant, la position angulaire du point d'engrènement du satellite gauche 51' avec la couronne 55 est diamétralement opposée avec celui du point d'engrènement du satellite droit 52', ainsi le centre de gravité des paires de pièces se trouve toujours sur l'axe central X mais ce n'est pas suffisant pour bien équilibrer le système puisqu'il faut également que l'un des axes principaux d'inertie soit aligné avec l'axe de rotation, ainsi afin d'équilibrer dynamiquement la paire de sous-ensembles excentrés (excentrique 317/roulements 511-521/satellites 51'-52'), il est nécessaire d'ajouter des masses ou de retrancher trous d'équilibrage 38 et 39 dont leur centre de gravité global devra également resté centré sur l'axe mais qui devront également compenser le moment dynamique provoqué par la rotation des satellites dont leur plan médian respectif se trouvent décalés axialement. Pour faciliter l'équilibrage, il est donc souhaitable d'alléger les deux sous-ensembles excentrés et de les rapprocher axialement.

En pratique, la rotation du moteur à une vitesse angulaire positive ω1, entraîne la rotation de l'organe moteur 31 et de l'excentrique 317 à la même vitesse. Les excentriques génèrent le mouvement spécifique des satellites 51' et 52', lesquels entraînent le porte satellite 57 dans une rotation négative de vitesse w2 largement inférieure à w1.

Le rapport de réduction R est égale à (D50 - D55)/D50. Si on exprime le rapport de réduction R avec le nombre des dents Z55 de la couronne 55 et le nombre de dents Z50 des satellites 50, nous avons les formules suivantes :

[Math. 2]

$$R = \frac{D50 - D55}{D50} = \frac{Z50 - Z55}{Z50}$$

Dans le mode de réalisation décrit ici, nous avons R = -1/45 (Z55 = 138, Z50 = 135).

Comme dans le premier mode de réalisation, on choisira un rapport de réduction compris, en valeur absolue, entre 1/30 et 1/60. Au-dessus de 1/30, le moteur utilisé devra être susceptible de fournir un couple important, ce qui implique que son circuit magnétique devra être également important et par conséquent plutôt lourd. L'utilisation d'un rapport de réduction inférieur à 1/60, implique l'utilisation d'un moteur qui tourne très vite et dans lequel les pertes par courants de Foucauld deviennent importantes, ce qui en dégrade considérablement le rendement, le meilleur compromis global se situe donc également dans cette gamme de rapport de réduction.

Les spécificités de choix de matériaux et de définition de denture de ce deuxième mode de réalisation restent équivalentes aux recommandations décrites dans le premier mode de réalisation.

La roue-libre 6 va maintenant être décrite en détail. Dans le principe, elle est similaire à celle décrite pour le premier mode de réalisation à la différence qu'elle près qu'elle est entraînée par le porte-satellite 57, et non pas par la couronne 55. Le corps de roue-libre 63 est fixé au porte satellite 57 par les vis 572. Elle comprend de manière classique deux cliquets 61 et une bague de synchronisation 62. Les cliquets 61 sont montés pivotants à l'intérieur d'un logement 631 ménagé dans le corps de roue-libre 63. Les cliquets 61 pivotent entre une position « engagée » (non représentée), dans laquelle leur extrémité distale est en prise avec une des dents 652 ménagées sur le rochet 65, et une position « dégagée » représentée à la figure 20 (coupe D-D).

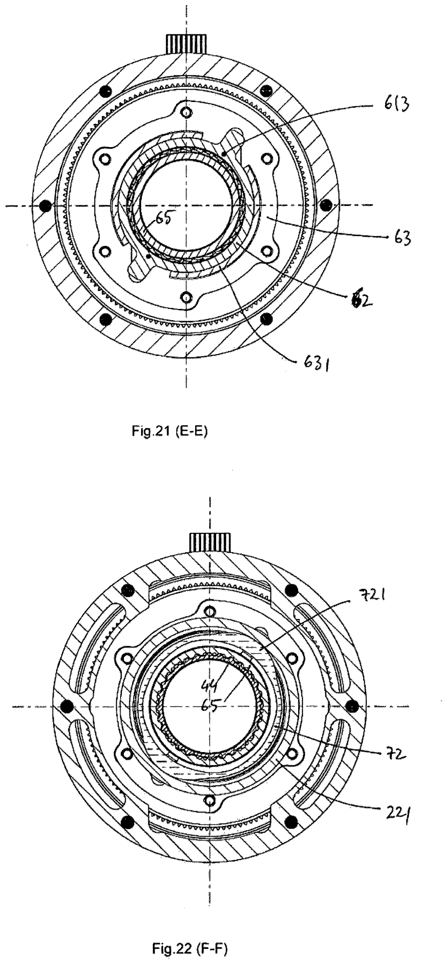

Une bague de synchronisation 62 (cf. figure 21) synchronise le mouvement de basculement des deux cliquets 61. Cette bague est reliée aux cliquets par deux goupilles 613. Elle est montée pivotante autour de l'axe X grâce à un rebord 631 qui la guide et maintien par clipsage contre le corps de roue libre 63. La bague de synchronisation 62 a une petite amplitude de rotation par rapport au corps de roue-libre 63. En effet, la bague de synchronisation est fixée aux cliquets à une distance de quelques millimètres de leur point de pivotement si bien que le pivotement des cliquets 61 autours des petits axes 612 entraîne un déplacement de quelques degrés des goupilles 613.

Les deux cliquets 61 sont opposés à 180° permettant d'équilibrer les efforts transmis en transmettant, en théorie, un couple pur sans composante radiale, et en divisant sensiblement par deux, l'effort transmis par chacun des cliquets. Les cliquets ont de préférence une extrémité avec un bec engageant avec des dents 652 ménagées sur le rochet 65. Ainsi, dès que l'extrémité du cliquet vient au contact du rochet 65, le cliquet va alors continuer sa course pour s'engager automatiquement en fond de dent malgré les frottements s'opposant à son engagement, leur permettant de rester parfaitement stables une fois engagés, la bague de synchronisation 62 montée en pivot sur la sortie du réducteur permet de synchroniser la rotation de celle-ci afin qu'ils s'engagent bien simultanément.

La roue-libre comprend également des moyens qui permettent de piloter les cliquets 61, et notamment de les maintenir en position dégagée. Ces moyens comprennent une bague de friction 72 et deux goupilles 73. La figure 22 montre la géométrie et le fonctionnement de la bague de friction 72. La bague de friction est un anneau élastiquement déformable qui vient en appui précontraint sur une partie fixe du dispositif sur au moins deux zones. Dans le mode de réalisation représenté, la partie fixe est un fût cylindrique 221, faisant saillie depuis la face intérieure du couvercle 22. Cette bague comporte deux bourrelets 721 diamétralement opposés ménagés sur la face intérieure de la bague. Ces bourrelets sont prévus pour venir glisser sur la surface intérieure du fût 221 issu du couvercle 22. La bague de friction 72 est solidaire en rotation de la bague de synchronisation 62 par l'intermédiaire de deux goupilles 73 s'insérant dans deux trous radialement oblongs diamétralement opposés. Pour assurer un certain serrage de la bague de friction sur le fût 221, le diamètre extérieur entre les deux bourrelets est, à l'état libre, légèrement supérieur d'environ 0,5 mm au diamètre extérieur du fût 221. La mise en place de la bague de friction générera une certaine ovalisation de cette dernière, la géométrie de cette bague de friction doit être dimensionnée pour générer deux efforts radiaux diamétralement opposés lors de son ovalisation de 0,5 mm sans engendrer de contraintes élevées sur cette dernière afin qu'elle puisse supporter ce niveau de contrainte sans fluage durant toute la durée de vie du produit. On pourra choisir un matériau de type PBT ou POM pour réaliser la bague car cette pièce de frottement doit avoir une très bonne résistance à l'usure, et une très bonne élasticité ainsi qu'un bon comportement à la température de fonctionnement pour garantir une très bonne stabilité de sa précontrainte de serrage sur toute la durée de vie d'utilisation du produit.

Le serrage diamétral de cette bague de friction 72 sur le fût 221 va induire un couple de frottement stable et maîtrisé s'opposant à la rotation de cette dernière par rapport au fût 221 lui-même lié au boîtier du cadre 1.

A titre d'exemple, on obtient un très bon fonctionnement en dimensionnant la bague de friction pour obtenir deux efforts radiaux diamétralement opposés au niveau des bourrelets de friction d'environ 5N sous un serrage diamétral de 0,5 mm avec un niveau de contrainte de moins de 10 MPa sur cette dernière, évitant ainsi tout risque de relaxation ou fluage dans le temps, ces efforts radiaux générés sur le fût de diamètre 35 mm permettent de générer un couple de frottement d'environ 25 mN.m dans les deux sens de rotation, largement suffisant pour engager et désengager les cliquets, tout en générant un couple suffisamment faible pour ne pas induire de perte de puissance significative lors du glissement de cette dernière, puisque ce couple de frottement de 25 mN.m ne génère une perte que de 0,2 Watt à 80 tour par minute, ce qui est négligeable devant la puissance d'assistance et qui ne permet pas d'échauffer et d'user la zone des bourrelets en contact avec le fût 221.

Le motoréducteur présenté dans ce deuxième mode de réalisation permet de transmettre un couple d'assistance continu de 30 N.m à une vitesse de rotation de 100 tr/min ce qui correspond à une puissance continue d'environ 315 Watt, son encombrement est très limité puisque le carter externe fait une longueur totale de 90 mm et que son diamètre extérieur inséré dans le cadre mesure seulement 79 mm. La longueur L5 de son réducteur mesure 23,15 mm alors que la longueur totale L5+L6 incluant le réducteur et le mécanisme de roue-libre ne mesure que 29,4 mm. La masse du réducteur (hors mécanisme de roue-libre) ne fait que 250 g alors que la masse du moteur pèse 260 g et que la masse totale du carter 21 incluant le moteur, le réducteur, la roue libre et les moyens de mesure pèse environ 930 g, donc largement inférieur à 1,5 kg.

Il est possible de combiner différents éléments entre les deux modes décrits sans sortir du cadre de l'invention. Il est par exemple possible de modifier le nombre d'entretoise 571 du porte satellite ainsi que le nombre de petits axes 575. La réduction du nombre d'entretoise et/ou des petits axes permet de diminuer le nombre de pièces du dispositif et par conséquent du poids de l'ensemble.

**Revendications**

**1.** Réducteur mécanique (5) comportant un rotor (32), une couronne extérieure (55) de diamètre primitif D55, un porte-satellite (57), lequel comprend au moins un satellite (51, 52, 53, 51',52') de diamètre primitif D50 prévu pour tourner à l'intérieur de la couronne avec une excentricité de valeur « e » égale à la moitié de la différence entre le diamètre D55 et le diamètre D50 ; e = ½(D55 - D50) ; ledit au moins un satellite étant monté rotatif sur le rotor (32) par l'intermédiaire d'un excentrique (315, 316, 317) comportant au moins une came (3101, 3102, 3171, 3172), **caractérisé en ce que** ladite came comprend une surface interne (31012, 31022, 31712, 31722) qui est cylindrique de diamètre D31 et une surface externe (31013, 31023, 31713, 31723) qui est cylindrique de diamètre D504, ledit diamètre D504 étant égal à la somme du diamètre D31 et du double de l'excentricité « e » ; D504 = D31 + 2e.

**2.** Réducteur selon la revendication 1, **caractérisé en ce que** ledit excentrique (315, 316, 317) comporte deux cames (3101, 3102, 3171, 3172) dont les apex respectifs (31015, 31025, 31715, 31725) sont diamétralement opposés.

**3.** Réducteur selon la revendication précédente, **caractérisé en ce qu'**il comprend deux satellites (51', 52'), chacun desdits deux satellites étant respectivement monté rotatif sur l'une des desdites deux cames (3171, 3172) par l'intermédiaire de roulement.

**4.** Réducteur selon la revendication 2 **caractérisé en ce qu'**il comprend deux excentriques (315, 316) et trois satellites (51, 52, 53), un premier satellite latéral (51) étant monté sur une came latérale (3101) du premier excentrique (315), un deuxième satellite (53) latéral étant monté sur une came latérale (3101) du deuxième excentrique (316) tandis que le satellite central (52) est monté sur les deux cames centrale (3102) juxtaposée du premier excentrique (315) et du deuxième excentrique (316).

**Patentansprüche**

**1.** Mechanisches Untersetzungsgetriebe (5) mit einem Rotor (32), einem äußeren Kranz (55) mit einem Teilkreisdurchmesser D55 und einem Planetenträger (57), der mindestens ein Planetenrad (51, 52, 53, 51', 52') mit einem Teilkreisdurchmesser D50 umfasst, das dazu vorgesehen ist, sich innerhalb des Kranzes mit einer Exzentrizität des Wertes "e" zu drehen, der gleich der Differenz zwischen dem Durchmesser D55 und dem Durchmesser D50 ist; e = 1/2(D55 - D50); wobei das mindestens eine Planetenrad über einen Exzenter (315, 316, 317), der mindestens einen Nocken (3101, 3102, 3171, 3172) aufweist, drehbar am Rotor (32) montiert ist, **dadurch gekennzeichnet, dass** der Nocken eine zylindrische Innenfläche (31012, 31022, 31712, 31722) mit einem Durchmesser D31 und eine zylindrische Außenfläche (31013, 31023, 31713, 31723) mit einem Durchmesser D504 umfasst, wobei der Durchmesser D504 gleich der Summe des Durchmessers D31 und der doppelten Exzentrizität "e" ist; D504 = D31 + 2e.

2. Untersetzungsgetriebe nach Anspruch 1, **dadurch gekennzeichnet, dass** der Exzenter (315, 316, 317) zwei Nocken (3101, 3102, 3171, 3172) aufweist, deren jeweilige Apex (31015, 31025, 31715, 31725) diametral gegenüberliegen.

3. Untersetzungsgetriebe nach dem vorangehenden Anspruch, **dadurch gekennzeichnet, dass** es zwei Planetenräder (51', 52') umfasst, wobei jedes der beiden Planetenräder jeweils drehbar über ein Lager an einem der beiden Nocken (3171, 3172) montiert ist.

4. Untersetzungsgetriebe nach Anspruch 2, **dadurch gekennzeichnet, dass** es zwei Exzenter (315, 316) und drei Planetenräder (51, 52, 53) umfasst, wobei ein erstes seitliches Planetenrad (51) an einem seitlichen Nocken (3101) des ersten Exzenters (315) montiert ist, ein zweites seitliches Planetenrad (53) an einem seitlichen Nocken (3101) des zweiten Exzenters (316) montiert ist, während das mittlere Planetenrad (52) an den beiden nebeneinanderliegenden mittleren Nocken (3102) des ersten Exzenters (315) bzw. des zweiten Exzenters (316) montiert ist.

**Claims**

1. Mechanical reduction gear (5) comprising a rotor (32), an outer ring gear (55) of pitch diameter D55, a planet carrier (57), which comprises at least one planet gear (51, 52, 53, 51', 52') of pitch diameter D50 designed to rotate inside the ring gear with an eccentricity of value "e" equal to half the difference between the diameter D55 and the diameter D50; e = ½(D55 - D50); said at least one planet gear being mounted so as to be able to rotate on the rotor (32) by means of an eccentric (315, 316, 317) comprising at least one cam (3101, 3102, 3171, 3172), **characterized in that** said cam comprises an inner surface (31012, 31022, 31712, 31722) which is cylindrical of diameter D31 and an outer surface (31013, 31023, 31713, 31723) which is cylindrical of diameter D504, said diameter D504 being equal to the sum of the diameter D31 and of double the eccentricity "e"; D504 = D31 + 2e.

2. Reduction gear according to Claim 1, **characterized in that** said eccentric (315, 316, 317) comprises two cams (3101, 3102, 3171, 3172) whose respective apexes (31015, 31025, 31715, 31725) are diametrically opposed.

3. Reduction gear according to the preceding claim, **characterized in that** it comprises two planet gears (51', 52'), each of said two planet gears being respectively mounted so as to be able to rotate on one of said two cams (3171, 3172) by means of a bearing.

4. Reduction gear according to Claim 2, **characterized in that** it comprises two eccentrics (315, 316) and three planet gears (51, 52, 53), a first lateral planet gear (51) being mounted on a lateral cam (3101) of the first eccentric (315), a second lateral planet gear (53) being mounted on a lateral cam (3101) of the second eccentric (316), whereas the central planet gear (52) is mounted on the two juxtaposed central cams (3102) of the first eccentric (315) and of the second eccentric (316).

Fig. 1

Fig.2

Fig.3 (A-A)

EP 3 908 511 B1

Fig.4 (B-B)

19

Fig. 5a

Fig.5b

Fig.6 (C-C)

Fig.7

Fig.8

Fig.9

Fig.10

Fig.11 (D-D)

[Fig. 1]

Fig.12 (E-E)

Fig.13 (F-F)

Fig. 14

[Fig.15]

COUPE A-A

Fig.15 (A-A)

Fig.16 (B-B)

Fig.17 (C-C)

Fig.18

Fig.19

Fig.20 (D-D)

Fig.21 (E-E)

Fig.22 (F-F)

30

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9616969 B
- US 8757311 B
- EP 2502819 A
- WO 2016128789 A
- US 20160245386 A
- JP H0579537 B
- EP 1449760 A